Europäisches Patentamt

European Patent Office

Office européen des brevets

(11) Publication number: **0 519 071 A1**

# EUROPEAN PATENT APPLICATION
## published in accordance with Art. 158(3) EPC

(21) Application number: **91905487.4**

(22) Date of filing: **06.03.91**

(86) International application number:
**PCT/JP91/00297**

(87) International publication number:
**WO 91/14223 (19.09.91 91/22)**

(51) Int. Cl.⁵: **G06F 9/06, G06F 13/00**

(30) Priority: **06.03.90 JP 55751/90**
**08.03.90 JP 57747/90**
**14.03.90 JP 63879/90**
**22.03.90 JP 75274/90**
**24.03.90 JP 74348/90**

(43) Date of publication of application:
**23.12.92 Bulletin 92/52**

(84) Designated Contracting States:
**DE FR GB IT**

(71) Applicant: **OMRON CORPORATION**
**10, Tsuchido-cho Hanazono Ukyo-ku**
**Kyoto 616(JP)**

(72) Inventor: **SUGANO, Satoshi, Omron**
**Corporation**
**10, Tsuchido-cho, Hanazono, Ukyo-ku**
**Kyoto-shi, Kyoto 616(JP)**
Inventor: **HISADA, Kouji, Omron Corporation,**
**10, Tsuchido-choHanazono, Ukyo-ku**
**Kyoto-shi, Kyoto 616(JP)**
Inventor: **TANAKA, Toshifumi, Omron**
**Corporation**
**10, Tsuchido-cho**
**Hanazono, Ukyo-ku, Kyoto-shi, Kyoto 616(JP)**

(74) Representative: **Kahler, Kurt, Dipl.-Ing.**
**Patentanwälte Kahler, Käck & Fiener**
**Maximilianstrasse 57 Postfach 12 49**
**W-8948 Mindelheim(DE)**

(54) PROGRAMMING SYSTEM AND METHOD, AND PROGRAMMING DEVICE AND TERMINALS CONSTITUTING THE SYSTEM.

(57) A plurality of application program packages (application packages), each of which comprises application programs for realizing unit functions, are stored beforehand in a library (24). When a set of functions to be realized is inputted (step S1), an address management table is created which stores the ID numbers of the application packages for realizing the inputted functions and the addresses of the memory areas of the RAM of a terminal where these application packages are to be loaded (step S4), the ID numbers and the stored addresses being in correspondence with each other. The application packages for realizing the inputted functions are loaded in the RAM of the terminal according to the package address management table (step S6).

Fig. 4

```
                    ( START )
                        |
        +---------------|
        |               |
        |      +-------------------+
        |      | INPUT FUNCTION LIST |  ~S1
        |      +-------------------+
        |               |
        |              S2
        |          /  CHECK  \
     NG |         <APPROPRIATENESS>
        +----------\         /
                    \  OK  /
                        |
              +-------------------+
              |     EXTRACT       |
              | REQUIRED PACKAGE  |  ~S3
              |   FROM LIBRARY    |
              +-------------------+
                        |
              +-------------------+
              |  CREATE MEMORY    |
              | MANAGEMENT TABLE  |  ~S4
              +-------------------+
                        |
              +-------------------+
              | LOAD PACKAGES IN  |
              | ACCORDANCE WITH   |  ~S5
              | MEMORY MANAGEMENT |
              |      TABLE        |
              +-------------------+
                        |
              +-------------------+
              |   LOAD MEMORY     |
              | MANAGEMENT TABLE  |  ~S6
              +-------------------+
                        |
                    (  END  )
```

2

Technical Field

This invention relates to a terminal device such as a POS (point-of-sales) terminal, an ECR (electronic cash register) or an ATM (automated teller machine) of which various functions are requested depending upon the environment such as the place of installation, a program creating apparatus for creating an application program, which conforms to the functions requested of the terminal device and supplying the program to the terminal device, a program creating system comprising this program creating apparatus and the terminal device, a program creating method, and a method of operating the terminal device in which the application program has been loaded.

Background Art

The functions which are required of data terminal devices such as a POS terminal, ECR and ATM differ depending upon the purchasing customer, the place of installation in a store, etc. For example, in the case of a POS terminal, there are instances where stores that offer discounts by credit card require the installation of a discounting program. At stores which sell merchandise the price of which differs depending upon whether payment is made in lump sum or in installments, it is required that a program conforming to the type of payment be installed in the POS terminal in advance.

If application programs for realizing all of these functions are installed in a terminal device, then the terminal device can be used commonly by all customers and at all locations. If such an expedient is adopted, however, this will require a memory having an enormous capacity. In terminal devices of this kind, application programs are stored in a semiconductor memory in order to achieve a high processing speed. Consequently, if a semiconductor memory having an enormous capacity is provided, this will raise the cost of the device considerably. Accordingly, it is desired that application programs which implement only those functions that are required be installed in a terminal device selectively.

A conventional application program loaded in a POS terminal device or the like is composed of a single program in which descriptions for realizing all functions are united into a single body. As a consequence, in a case where the functions required differ from customer to customer or from one place of installation to another, the entire program must be altered accordingly. This operation can be performed only by a technician who understands the structure of the program and possesses the technical skill to make the revision. In addition, the operation requires a great amount of time and is costly.

There are instances in which it is desired to alter part of an application program in order to change the specifications of and debug the application program once it has been loaded in a terminal device. In such cases also, the conventional practice is such that the altered portion must be re-linked with the other remaining portions of the program. This not only is laborious but also requires that the entire application program be replaced as far as the terminal device is concerned.

Furthermore, in a case where the application program is transmitted from a host device to the terminal device-through a public telephone line or private branch line, the fact that the communication rate of a line is on the order of 2400 bps means that an extended period of time is needed in order to transmit the application program, the overall length of which may be 100 KB or greater.

Since application programs are transmitted successively from a single host device to a plurality of terminal devices, an extremely long period of time is needed in order to complete the transmission of the application programs to all of the terminal devices. In view of the fact that an application program has an overall length of about 200 KB, the probability that an error will occur during the transmission is high, and there is also a high probability that re-transmission will be necessary.

In cases were an application program that satisfies the functions required of a terminal device is created, there are instances where the memory capacity necessary for storing the application program cannot be ascertained accurately until just before the completion of development, and the memory capacity may be inadequate when the application program is completed. In addition, the cost of the memory cannot be decided until the application program is completed.

An object of first and second aspects of the present invention is to make it possible to readily and speedily create an application program for implementing a set of functions required by individual terminal devices or a group of terminal devices.

Another object of first and second aspects of the present invention is to make it possible to readily and reliably load a created application program in a terminal device.

An object of a third aspect of the present invention is to realize the linking together of program packages in a case in which application programs put into package form are combined.

An object of a fourth aspect of the present invention is to achieve a reduction in communication costs when down-line loading a program from a host device to a plurality of terminal devices.

An object of a fifth aspect of the present invention is to make it possible to evaluate quantitatively the degree of importance of each of a plurality of program packages constituting an application program.

Another object of the fifth aspect of the present invention is to make it possible to deal precisely with a situation that arises when an application program composed of a plurality of program packages develops a fault.

An object of a sixth aspect of the present invention is to make it possible to calculate the memory capacity needed to store an application program which satisfies required functions, and to calculate the price of this application program and the price of the terminal device containing this application program.

Disclosure of the Invention

A program creating system according to the first aspect of the present invention comprises program file means for storing a plurality of program packages each of which comprises a program for implementing a unit function, function input means for inputting a set of functions which require implementation, and means for reading the program packages, which are for implementing the functions inputted by the function input means, out of the program file means and outputting the program packages.

A program creating apparatus according to the first aspect of the present invention comprises program file means for storing a plurality of program packages, each of which comprises a program for implementing a unit function, having ID numbers that differ from one another, function input means for inputting a set of functions which require implementation, means for creating a package-address management table which stores, in correlated form, the ID numbers of the program packages for implementing the functions inputted by the function input means, and addresses of storage areas in memory means in a terminal device in which these program packages are to be loaded, and means for reading the program packages, which are for implementing the functions inputted by the function input means, out of the program file means and loading them in the terminal device in accordance with the created package-address management table.

The loading means loads the created package-address management table in the terminal device.

The program creating apparatus further comprises means which, when a new set of functions has been inputted by the function input means, refers to the package-address management table for judging whether there is a program package to be added, decides the address of the storage area of the memory means in which the program package to be added is to be loaded if there is a program package to be added, and updates the package-address management table.

The loading means reads the program package to be added out of the program file means and loads it in the terminal device together with the updated package-address management table.

The program creating apparatus further comprises means which, when a new function to be added has been inputted by the function input means, decides the address of the storage area of the memory means in which the program package for implementing the new function is to be loaded, and updates the package-address management table.

The program creating apparatus further comprises means which, when a new set of functions has been inputted by the function input means, refers to the package-address management table for judging whether there is a program package to be deleted, and, if there is a program package to be deleted, erases data relating to this program package from the package-address management table.

The program creating apparatus further comprises means which, if there is a program package to be deleted, commands the terminal device to erase this program package from the memory means.

The program creating apparatus further comprises means which, when data representing a program package to be deleted has been inputted by the function input means, erases data relating to this program package from the package-address management table and commands the terminal device to erase this program package from the memory means.

The loading means in the program creating apparatus is means for transmitting the program package read out of the program file means or means for recording the program package read out of the program file means on a recording medium.

A program creating method according to the first aspect of the present invention comprises storing beforehand, in a program file, a plurality of program packages, each of which comprises a program for implementing a unit function, having ID numbers that differ from one another, creating a package-address management table when a set of functions requiring implementation has been inputted, wherein the package-address management table stores, in correlated form, the ID numbers of the program packages for implementing the inputted functions and addresses of storage areas in a memory in a terminal device in which these program packages are to be loaded, reading the program packages, which are for implementing the inputted functions, out of the program file and loading them in the terminal device in accordance with the created package-address management table.

The program creating method further comprises loading the created package-address management table in the terminal device.

The program creating method further comprises referring to the package-address management table to judge whether there is a program package to be added when a new set of functions has been inputted, deciding the address of the storage area of the memory in which the program package to be added is to be loaded if there is such a program package to be added, and updating the package-address management table.

In the foregoing program creating method, the program package to be added is read out of the program file and is loaded in the terminal device together with the updated package-address management table.

The program creating method further comprises deciding the address of the storage area of the memory in which the program package for implementing the new function is to be loaded when a new function to be added has been inputted, and updating the package-address management table.

The program creating method further comprises referring to the package-address management table to judge whether there is a program package to be deleted when a new set of functions has been inputted, and, if there is such a program package to be deleted, erasing data relating to this program package from the package-address management table.

The program creating method further comprises commanding the terminal device to erase a program package from the memory if there is a program package to be deleted.

The program creating method further comprises erasing data relating to a program package from the package-address management table and commanding the terminal device to erase this program package from the memory means when data representing this program package to be deleted has been inputted by the input means.

In the program creating method, the program package read out of the program file is loaded by being transmitted to the terminal device or the program package read out of the program file is loaded by being recorded on a recording medium.

In accordance with the first aspect of the present invention, when a set of functions required of a terminal device by users is inputted, program packages for implementing these functions are selected from a large number of program packages already created, and the program packages are combined, thereby creating an application program suited to the terminal device.

Accordingly, an application program which satisfies the required functions can be created easily and speedily.

Further, in accordance with the first aspect of the invention, when part of a function to be implemented is altered, it suffices merely to make an input to this effect, in response to which the unnecessary program package is deleted and the required program package is added.

Further, in accordance with the first aspect of the invention, each terminal device is loaded solely with programs which satisfy the functions required of this terminal device, and unnecessary programs are not loaded. As a result, it will suffice if the memory capacity in the terminal device is small.

Further, in accordance with the first aspect of the invention, the program creating apparatus decides the storage area of the terminal device memory in which the created application program is to be loaded. As a result, the terminal device does not require installation of a program which decides a storage area in which loading is to take place, and therefore the construction of the terminal device can be simplified.

The second aspect of the invention is for deciding a storage area of the memory, in which an application program is to be loaded, in the terminal device.

A program creating system according to the second aspect of the present invention comprises a program creating apparatus and terminal devices connected to this apparatus by a transmission line, wherein the program creating apparatus comprises program file means for storing a plurality of program packages, each of which comprises a program for implementing a unit function, having ID numbers that differ from one another, function input means for inputting a set of functions which require implementation, means for creating a package-address management table which stores the ID numbers of the program packages for implementing the functions inputted by the function input means, in correlation with ID numbers of terminal devices in which these program packages are to be loaded, and means for reading the program packages, which are for implementing the functions inputted by the function input means, out of the program file means and loading them in the terminal devices in accordance with the created package-address management table, and the terminal devices comprise memory means for storing the program packages transmitted from the program creating apparatus, and a package-address management table for storing, in correspondence with the ID numbers of the program packages stored in the memory means, the addresses of storage areas of the memory means in which the program packages will be stored.

The program creating apparatus according to the second aspect of the present invention comprises program file means for storing a plurality of program packages, each of which comprises a programs each for implementing a unit function, having ID numbers that differ from one another, function input means for inputting a set of functions which require implementation, means for creating a package management table which stores the ID numbers of the program packages for implementing the functions inputted by the function input means, in correlation with ID numbers of terminal devices in which these program packages are to be loaded, and means for reading the program packages, which are for implementing the functions inputted by the function input means, out of the program file means and loading them in the terminal devices in accordance with the created package management table.

The program creating apparatus further comprises means which, when a new set of functions has been inputted by the function input means, refers to the package management table for judging whether there is a program package to be added, reads the program package to be added out of the program file means and loads it in the terminal devices if there is such a program package to be added, and updates the package management table.

The program creating apparatus further comprises means which, when a new function to be added has been inputted by the function input means, reads the program package for implementing this new function out of the program file means, loads it in the terminal devices and updates the package management table.

The program creating apparatus further comprises means which, when a new set of functions has been inputted by the function input means, refers to the package management table for judging whether there is a program package to be deleted, and, if there is such a program package to be deleted, erases the ID number of this program package from the package management table.

The program creating apparatus further comprises means which, if there is a program package to be deleted, commands the terminal device to erase this program package.

The program creating apparatus further comprises means which, when data representing a program package to be deleted has been inputted by the function input means, commands the terminal device to erase the ID number of this program package from the package management table and erase this program package from the memory means.

A terminal device according to the second aspect of the present invention comprises memory means for storing program packages to be loaded, a package-address management table for storing, in correspondence with ID numbers of the loaded program packages, the addresses of storage areas of the memory means in which the program packages will be loaded, and means which, when a program package to be loaded has been provided, refers to the package-address management table for deciding the address of the storage area in which this program package is to be stored, stores the provided program package in this storage area and updates the package-address management table.

The terminal device further comprises means which, when a program package to be loaded has been provided, refers to the package-address management table for judging whether there is a storage area adequate for storing this program package, and, when there is no adequate storage area, outputs a signal to this effect.

The terminal device of the present invention further comprises means which, when a command indicating that a program package should be erased is received, refers to the package-address management table to erase the pertinent program package from the memory means and update the package-address management table.

A program creating method according to the second aspect of the present invention comprises storing beforehand, in a program file, a plurality of program packages, each of which comprises a program for implementing a unit function, having ID numbers that differ from one another, creating a package management table when a set of functions which require implementation have been inputted, wherein the package management table stores the ID numbers of the program packages for implementing the inputted functions in correlation with ID numbers of terminal devices in which these program packages are to be loaded, reading the program packages, which are for implementing the inputted functions out of the program file and loading them in the terminal device in accordance with the created package management table.

The program creating method further comprises referring to the package management table to judge whether there is a program package to be added when a new set of functions has been inputted, reading a program package to be added out of the program file and loading this program package in the terminal device if there is a program package to be added, and updating the package management table.

The program creating method further comprises reading the program package for implementing the new function out of the program file and loading it in the terminal device when such a new function to be added has been inputted, and updating the package management table.

The program creating method further comprises referring to the package management table to judge whether there is a program package to be deleted when a new set of functions has been inputted, and, if there is a program package to be deleted, erasing the ID number of this program package from the package management table.

The program creating method further comprises commanding the terminal device to erase a program package if there is a program package to be deleted.

The program creating method further comprises commanding the terminal device to erase the ID number of a program package from the package management table and erase this program package when data representing a program package to be deleted has been inputted.

A method of loading a program in a terminal device according to the second aspect of the present invention comprises creating a package-address management table for storing, in correspondence with ID numbers of program packages, addresses of storage areas of a memory in which the program packages will be loaded, and, when a program package to be loaded has been provided, referring to the package-address management table for deciding the address of the storage area in which this program package is to be stored, storing the provided program package in this storage area and updating the package-address management table.

The method of loading a program in a terminal device terminal further comprises referring to the package-address management table for judging whether there is a storage area adequate for storing a program package when this program package to be loaded has been provided, and, when there is no adequate storage area, outputting a signal to this effect.

The method of loading a program in a terminal device terminal further comprises referring to the package-address management table to erase a pertinent program package from the memory and updating the package-address management table when a command indicating that this program package should be erased has been received.

A terminal device according to the second aspect of the present invention comprises memory means for storing program packages to be loaded, means which, when a program package to be loaded has been provided, decides an address of the storage area of the memory means in which this program package is to be stored, and stores the provided program package in this storage area, and means for creating a package-address management table for storing, in correspondence with ID numbers of the program packages, the addresses of storage areas of the memory means in which the program packages will be loaded.

A method of loading a program in a terminal device according to the second aspect of the present invention comprises deciding the address of a storage area of memory means in which a program package is to be stored when this program package to be loaded has been provided, storing the provided program package in this storage area, and creating a package-address management table for storing, in correspondence with ID numbers of the program packages, the addresses of storage areas of the memory in which the program packages will be loaded.

In the second aspect of the invention also, an application program for implementing the functions required of a terminal device can be created easily and speedily, in a manner similar to that of the first aspect of the invention. In addition, alterations also can be made very easily and quickly. Furthermore, the memory capacity in the terminal device need not be large.

In accordance with the second aspect of the invention, the storage area of the memory in which an application program created by a program creating apparatus is to be loaded is decided on the side of the terminal device. As a result, it will suffice for the program creating apparatus to merely transmit the application program.

The third aspect of the present invention relates to linking between mutual program packages serving as units constructing an application program in the first and second aspects of the present invention.

A terminal device according to the third aspect of the present invention comprises memory means for storing a plurality of program packages, each of which comprises a program for implementing a unit function, having ID numbers that differ from one another, the program package means which contains an instruction which, during execution of processing in accordance with this program, calls a package interface program in order to call another program package, this instruction including an ID number of the program package to be called, a memory management table for storing a starting address of a storage area, in which each program package in the memory means has been stored, in correlation with the ID number of the corresponding program package, and package-interface program means which, when called by the call instruction of the program package, reads the starting address corresponding to the ID number of the program package included in this instruction out of the memory management table and performs control so that a jump is effected to this starting address.

In this terminal device, the instruction further includes data used in processing in accordance with the package program to be called.

In this terminal device, the program package is described using relative addresses that are valid within the program package.

In this terminal device, the program package is described using relative addresses valid within the program package, and, in execution of processing in accordance with each program package, the starting address of the storage area in which this program package is stored in the memory means is used as a base, and an absolute address in the memory means is calculated by adding a relative address to the starting address.

A method of linking a package program according to the third aspect of the present invention comprises storing beforehand, in a memory, a plurality of program packages, each of which comprises a program for implementing a unit function, having ID numbers that differ from one another, wherein each program package is constructed so as to contain an instruction which, during execution of processing in accordance with this program, calls a package interface program in order to call another program package, and in such a manner that this instruction includes an ID number of the program package to be called, creating beforehand a memory management table for storing a starting address of a storage area, in which each program package in the memory has been stored, in correlation with the ID number of the corresponding program package, and, when the package interface program has been called by the call instruction of the program package, reading the starting address corresponding to the ID number of the program package included in this instruction out of the memory management table and performing control so that a jump is effected to this starting address.

In this method of linking a package program, the instruction is constructed so as to further include data used in processing in accordance with the package program to be called.

In this method of linking a program package, the program package is described using relative addresses valid within the program package.

In this method of linking a program package, the program package is described using relative addresses valid within the program package, and, in execution of processing in accordance with each program package, the starting address of the storage area in which this program package is stored in the memory is used as a base, and an absolute address in the memory is calculated by adding a relative address to the starting address.

In accordance with the third aspect of the present invention, the package-interface program is always traversed when the jump is made to the other program package during execution of processing in accordance with a certain program package. This package-interface program decides the address of the destination of the jump by referring to the memory management table. Further, the program package is described using a relative address in which the starting address of a storage area of the memory in which this program package has been stored serves as a base.

Accordingly, in accordance with the third aspect of the invention, a plurality of application programs can be linked to one another while they are maintained in a mutually independent form. When part of an application program is revised, it will suffice to revise only the program package having the portion to be revised, and the revision will not extend over the entire application program. Since a plurality of program packages are linked to one another, it is possible to select the necessary packages from a large number of application packages and combine them, as in the first and second aspects of the present invention.

The fourth aspect of the present invention relates to loading of a program package from a program creating apparatus to each terminal device through a transmission line. In the fourth aspect of the invention, the program creating apparatus is connoted in a broader concept of a host device.

A data processing system according to the fourth aspect of the present invention is composed of a host device and a plurality of network terminal devices connected hierarchically to the host device via a transmission line, wherein the plurality of network terminal devices are composed of at least one network terminal device of a superior hierarchical level and a plurality of network terminal devices of inferior hierarchical levels, the host device has program file means for storing a plurality of program packages, each of which comprises a program for implementing a unit function, and first means for reading a prescribed program package out of the program file means and down-line loading it to the network terminal device of the superior hierarchical level, the network terminal device of the superior hierarchical level has second means for down-line loading the program package, which has been transmitted from the host device, to the network terminal devices of the inferior hierarchical level, and each network terminal device of the inferior hierarchical level has memory means for storing the program package transmitted from the network terminal device of the superior hierarchical level.

In this data processing system, the first means in the host device designates, to the network terminal device of the superior hierarchical level, the network terminal device of the inferior hierarchical level to which down-line loading is to be performed.

The second means of the network terminal device of the superior hierarchical level down-line loads the program package from the host device to the designated network terminal device of the inferior hierarchical level.

In this data processing system, the network terminal device of the superior hierarchical level has memory means for storing a program package transmitted from the host device.

A method of downloading a program according to the fourth aspect of the present invention comprises connecting hierarchically a plurality of network terminal devices to a host device via a transmission line, dividing the plurality of network terminal devices into at least one network terminal device of a superior hierarchical level and a plurality of network terminal devices of inferior hierarchical levels, storing beforehand a plurality of program packages, each of which comprises a program for implementing a unit function, in a program file of the host device, reading a prescribed program package out of the program file and down-line loading it to the network terminal device of the superior hierarchical level by the host device, down-line loading the program package, which has been transmitted from the host device, to the network terminal devices of inferior hierarchical levels by the network terminal device of the superior hierarchical level, and storing the program package, which has been transmitted from the network terminal device of the superior hierarchical level, to a memory of the network terminal devices of inferior hierarchical levels.

In this method of downloading a program, the network terminal device of the inferior hierarchical level to which down-line loading is to be performed is designated to the network terminal device of the superior hierarchical level by the host device. The network terminal device of the superior hierarchical level down-line loads the program package from the host device to the designated network terminal device of the inferior hierarchical level.

In this method of down-line loading a program, a program package transmitted from the host device is stored in a memory of the network terminal device of the superior hierarchical level.

In accordance with the fourth aspect of the present invention, the host device need only transmit program packages to the network terminal device of the superior hierarchical level, and therefore the load on the host device is alleviated. In particular, in a system in which the host device and the network terminal device of the superior hierarchical level are connected by a public telephone line, and the network terminal device of the superior hierarchical level and the network terminal devices of the inferior hierarchical levels are connected by a private branch line, the public telephone line is used only in down-line loading from the host device to the network terminal device of the superior hierarchical level. As a result, in comparison with the case in which down-line loading from the host device to all network terminal devices is performed using a public telephone line, the fee for using the public telephone line can be greatly reduced, thereby providing greater economy.

In the first and second aspects of the present invention, as described above, an application program to be down-line loaded from a host device to a terminal device is constituted by a plurality of program packages. One program package is capable of being transmitted as a unit. Therefore, even if a transmission error occurs, it will suffice if only the program package in which the error has occurred is re-transmitted, and recovery from the transmission error is carried out in a short period of time. Since the amount of data in each program package is small in comparison with the overall application program, the probability that errors will occur is reduced. Furthermore, when an application program is altered, it will suffice to transmit only the program package to be added. As a result, a shortening of transmission time and a decline in the probability that an error will occur can be achieved.

A fifth aspect of the present invention relates to management of each program package in a terminal device.

A terminal device according to the fifth aspect of the present invention comprises memory means for storing a plurality of program packages, each of which comprises a program for implementing a unit function, having ID numbers that differ from one another, package-supervisor program means contained in each program package and used when another program package is called in processing in accordance with this program, and means for recording, in accordance with the package-supervisor program means, at least one of the number of times a called program package is called and a history of execution of the called program package.

This history of execution includes data relating to the order in which program packages were called and the times at which they were called.

A program management method according to the fifth aspect of the present invention comprises storing beforehand, in memory, a plurality of program packages, each of which comprises a program for implementing a unit function, having ID numbers that differ from one another, constructing each program package so as to include a package-supervisor program used when another program package is called in processing in accordance with this program, and recording, in accordance with the package-supervisor program, at least one of the number of times a called program package is called and a history of execution of the called program package.

The history of execution includes data relating to the order in which program packages were called and the times at which they were called.

In accordance with the fifth aspect of the present invention, data representing the number of times each program package is called, namely the frequency of use thereof, is obtained. As a result, it is possible to judge which program packages are important and which program packages are unnecessary. This data can be utilized to develop a new terminal device or program.

Further, in accordance with the fifth aspect of the present invention, a history of execution of a program package is recorded. Therefore, when a fault has occurred, it is possible to precisely ascertain in which program package and at what point in time the fault developed, and the fault which has occurred can be dealt with quickly and accurately.

The sixth aspect of the present invention relates to a program creating apparatus and a program creating method. According to the sixth aspect of the present invention, the cost of a program, the memory capacity necessary for storing the program and the cost of hardware are estimated in the creation of a program in accordance with the first and second aspects of the present invention.

A program creating apparatus according to the sixth aspect of the present invention comprises program file means for storing a plurality of program packages comprising a plurality of program packages each of which comprises a program for implementing a unit function, function input means for inputting a set of functions which require implementation, a package data table for storing beforehand, in correlation with respective ID numbers representing the plurality of program packages, unit prices of the program packages and memory capacities needed to store the program packages, a memory unit-price table for storing beforehand a unit price for each type of memory, first means which refers to the package data table for calculating the total price of the program packages for implementing the functions inputted by the function input means, second means for calculating the memory capacity needed to store the program packages for implementing the functions inputted by the function input means, third means which refers to the memory unit-price table for calculating the total price of the memory for realizing the memory capacity calculated by the second means, and means for outputting the total price of the program packages, the memory capacity and the total price of the memory that have been calculated.

Another program creating apparatus according to the sixth aspect of the present invention comprises program file means for storing a plurality of program packages each of which comprises a program for implementing a unit function, function input means for inputting a set of functions which require implementation, a package data table for storing beforehand, in correlation with respective ID numbers representing the plurality of program packages, unit prices of the program packages, memory capacity needed to store the program packages, and types of optional equipment necessary for executing the program packages, a hardware unit-price table for storing beforehand a unit price of each type of memory and a standard hardware price, an optional equipment unit-price table for storing beforehand a unit price of each type of optional equipment, first means which refers to the package data table for calculating the total price of the program packages for implementing the functions inputted by the function input means, second means for calculating the memory capacity needed to store the program packages for implementing the functions inputted by the function input means, third means which refers to the hardware unit-price table for calculating the total price of the memory for realizing the memory capacity calculated by the second means, fourth means which refers to the optional equipment unit-price table for calculating the total price of optional equipment required by program packages for implementing the functions inputted by the function input means, fifth means for calculating the total price of hardware by adding the standard hardware price that has been stored in the hardware unit-price table, the calculated total price of the memory and the calculated total price of the optional equipment, and means for outputting the total price of the program packages, the memory capacity and the total price of the hardware that have been calculated.

The output means is a display device, by way of example.

A program creating method according to the sixth aspect of the present invention comprises storing, in a program file, a plurality of program packages, each of which comprises a program for implementing a unit function, creating a package data table for storing beforehand, in correlation with respective ID numbers representing the plurality of program packages, unit prices of the program packages and memory capacities needed to store the program packages, creating a memory unit-price table for storing beforehand a unit price for each type of memory, calculating, by referring to the package data table, the total price of program packages for implementing an inputted set of functions, calculating the memory capacity needed to store the program packages for implementing the inputted set of functions, calculating, by referring to the memory unit-price table, the total price of the memory for realizing the calculated memory capacity, and outputting the total price of the program packages, the memory capacity and the total price of the memory that have been calculated.

Another program creating method according to the sixth aspect of the present invention comprises storing, in a program file, a plurality of program packages, each of which comprises a program for implementing a unit function, creating a package data table for storing beforehand, in correlation with respective ID numbers representing the plurality of program packages, unit prices of the program packages, memory capacities needed to store the program packages and types of optional equipment necessary for executing the program packages, creating a hardware unit-price table for storing beforehand a unit price of each type of memory and a standard hardware unit price, creating an optional equipment unit-price table for storing beforehand a unit price of each type of optional equipment, calculating, by referring to the package data table, the total price of program packages for implementing an inputted set of functions, calculating the memory capacity needed to store the program packages for implementing the inputted set of functions, calculating, by referring to the hardware unit-price table, the total price of the memory for realizing the calculated memory capacity, calculating, by referring to the optional equipment unit-price table, the total price of the optional equipment required by program packages for implementing the inputted set of functions, calculating the total price of hardware by adding the standard hardware price that has been stored in the hardware unit-price table, the calculated total price of the memory and the calculated total price of the optional equipment, and outputting the total price of the program packages, the memory capacity and the total price of the memory that have been calculated.

In accordance with the sixth aspect of the present invention, the user selects and inputs the functions that are necessary, whereby the cost entailed by the application program which satisfies these functions, the necessary memory capacity and the cost of the memory are calculated. In addition, the total price of the hardware inclusive of the terminal device and optional equipment is calculated.

Accordingly, when an application program is created or proposed, the user can be presented with an accurate estimate in advance.

Since the price of the application per se also can be calculated, sale solely of the application program also can be realized. In such case, the program in a terminal device already installed by a user is modified. Since the memory capacity needed to store a new application program also is calculated, it is possible to promptly judge whether the capacity of the memory in the terminal device possessed by the user is sufficient.

Brief Description of the Drawings

Figs. 1 through 5 illustrate an embodiment of a first aspect of the present invention (namely a first embodiment thereof), in which:

Fig. 1 is a block diagram showing the construction of a POS terminal system illustrative of an application program creating apparatus;

Fig. 2 is a block diagram showing the construction of an application program creating apparatus;

Fig. 3 shows a memory management table provided in a RAM of the application program creating apparatus;

Fig. 4 is a flowchart showing a procedure for creating an initial application program required by a POS terminal and loading the program in the POS terminal in the application program creating apparatus; and

Fig. 5 is a flowchart showing a procedure for a case in which an application program that has already been loaded in a POS terminal is altered in the application program creating apparatus;

Figs. 6 through 10 illustrate an embodiment of a second aspect of the present invention (namely a second embodiment thereof), in which:

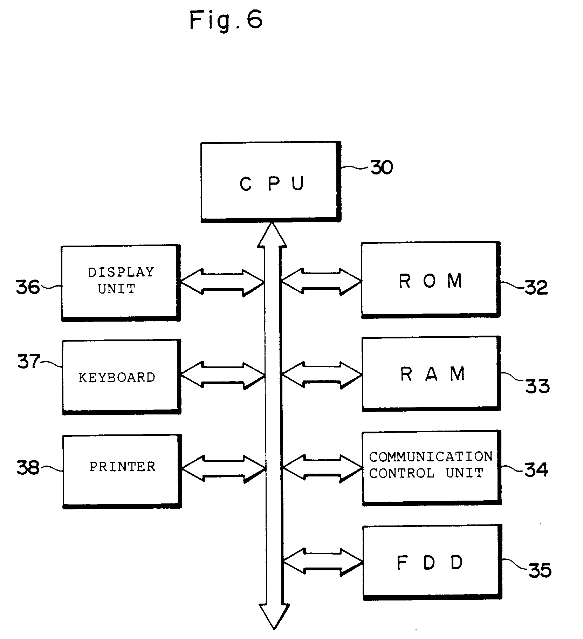

Fig. 6 is a block diagram showing the construction of a POS terminal;

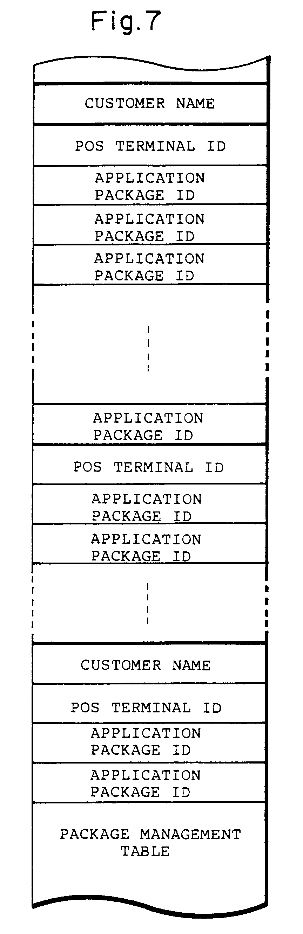

Fig. 7 shows a package management table provided in a RAM of an application program creating apparatus;

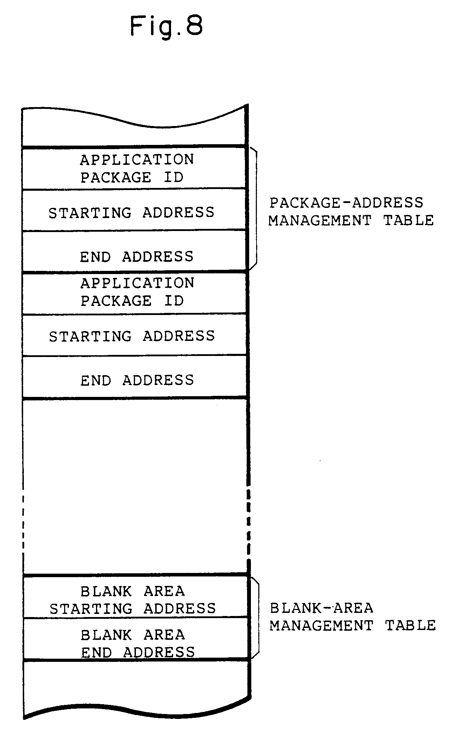

Fig. 8 shows a package-address management table and a blank-area management table provided in a RAM of a POS terminal;

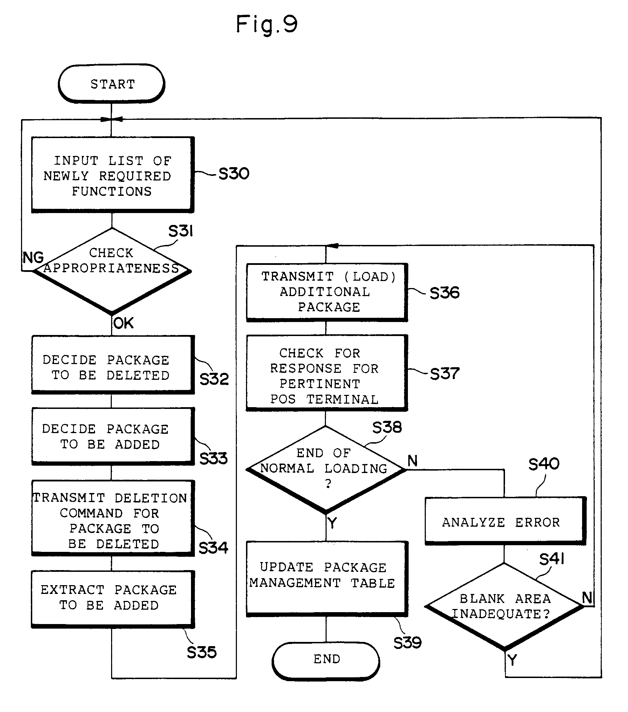

Fig. 9 is a flowchart showing a procedure for when an application program required by a POS terminal is created and loaded by an application program creating apparatus, and for when an application program that has already been loaded in a POS terminal is altered; and

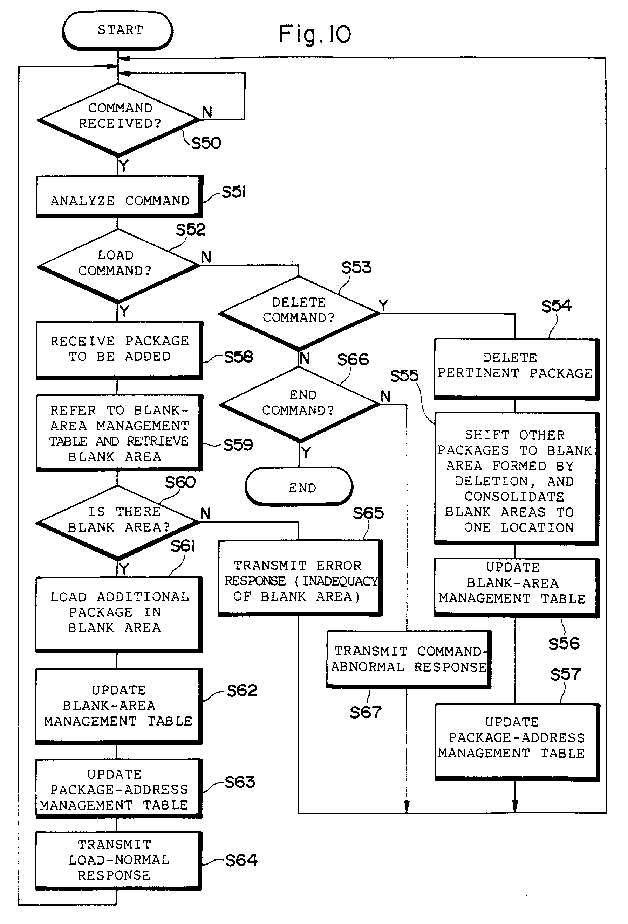

Fig. 10 is a flowchart showing the procedure of processing for loading and processing for deleting an application program, the processing being executed by a CPU in the POS terminal;

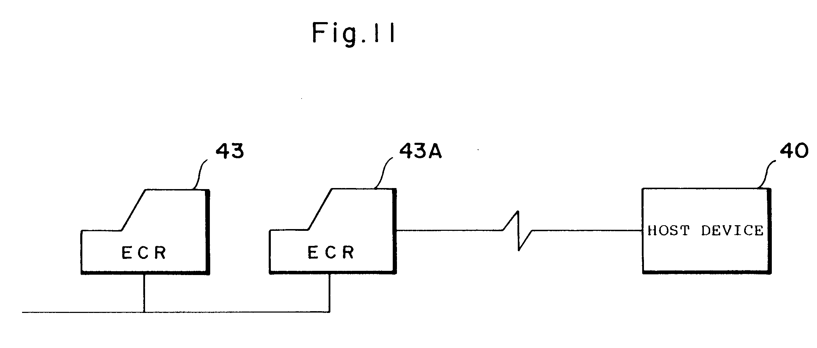

Figs. 11 through 16 illustrate an embodiment of a third aspect of the present invention (namely a third embodiment thereof), in which:

Fig. 11 is a block diagram showing the construction of an ECR system;

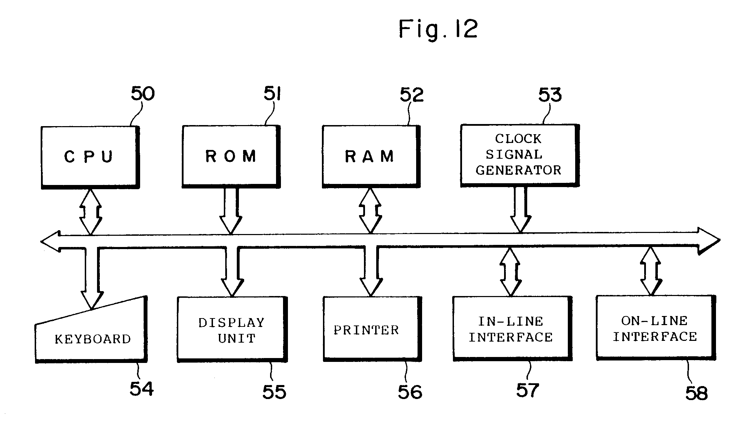

Fig. 12 is a block diagram showing the construction of a master ECR;

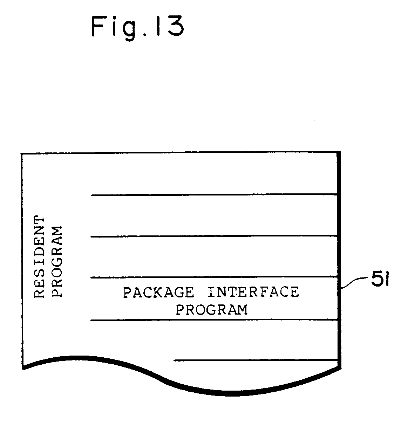

Fig. 13 illustrates the contents of a resident program that has been stored in a ROM of an ECR;

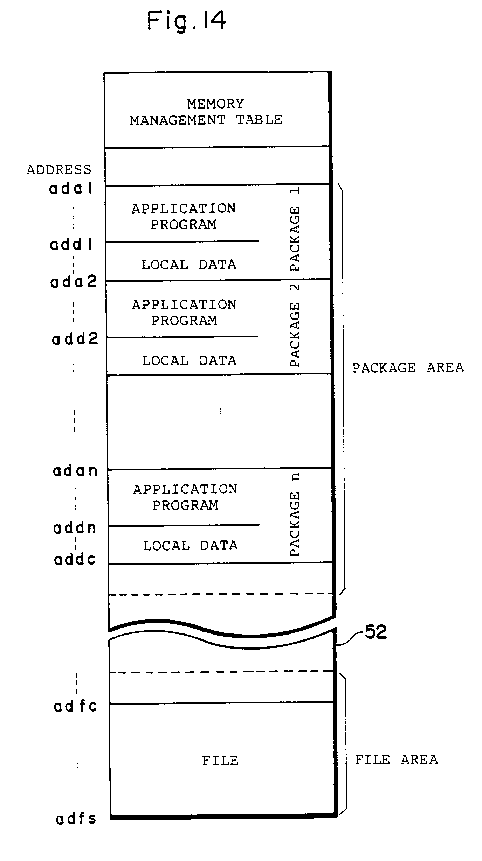

Fig. 14 shows a memory management table area, a package area and a file area provided in a RAM of an ECR;

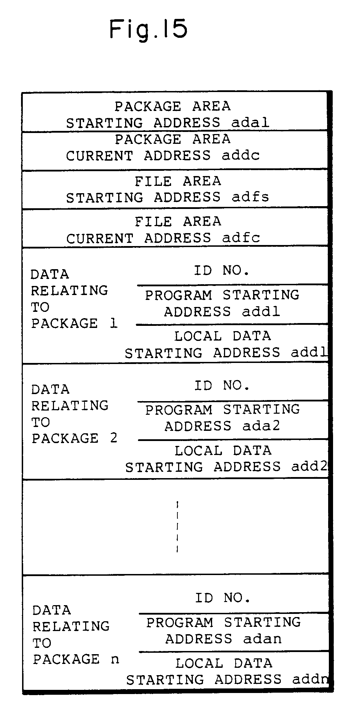

Fig. 15 shows the details of the memory management table; and

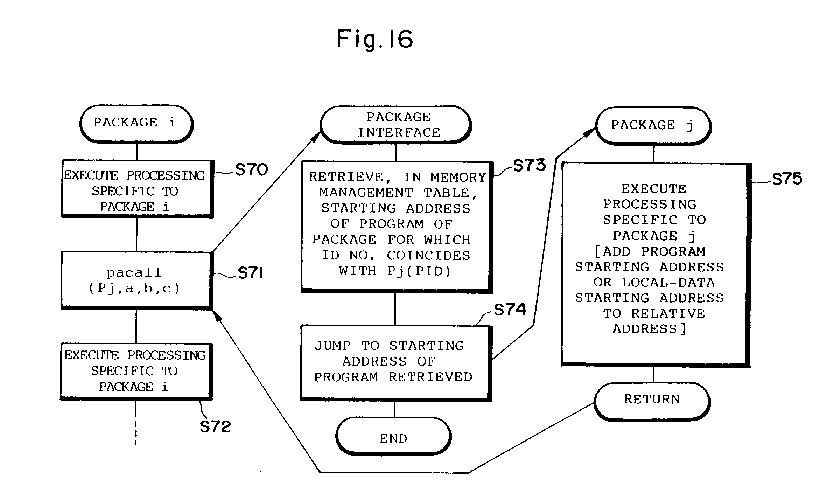

Fig. 16 is a flowchart showing a processing procedure for when another application program is called during execution of processing of a certain application program;

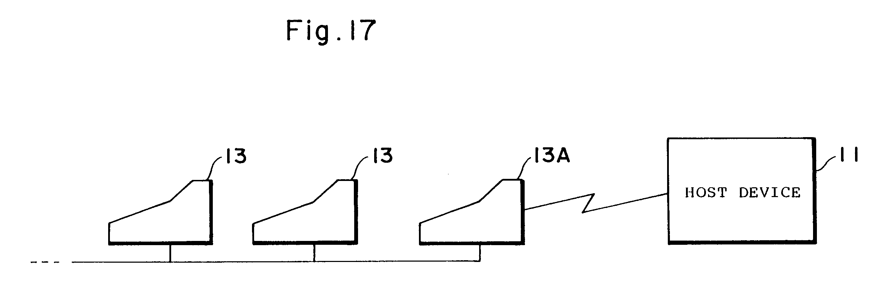

Figs. 17 through 23 illustrate an embodiment of a fourth aspect of the present invention (namely a fourth embodiment thereof), in which:

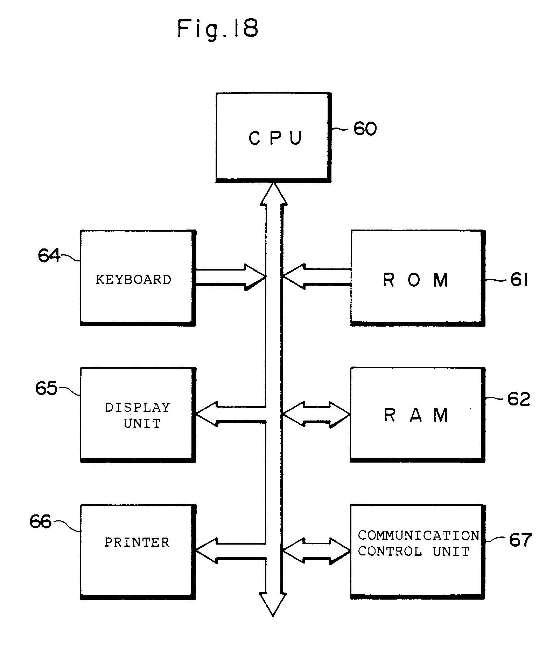

Fig. 18 is a block diagram showing the construction of a POS terminal;

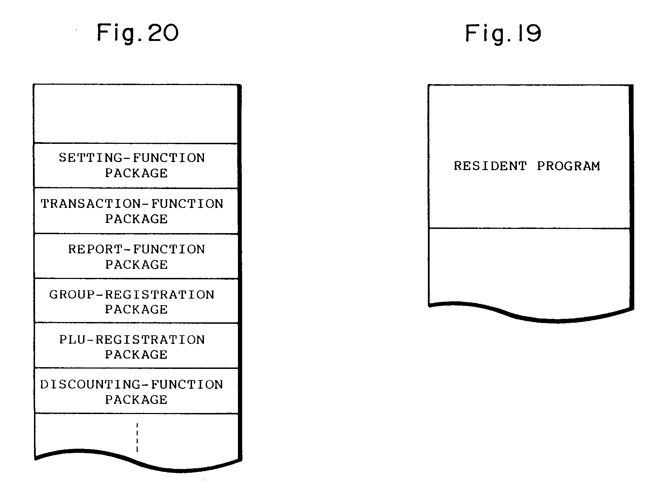

Fig. 19 illustrates a ROM in which the resident program of the POS terminal has been stored;

Fig. 20 shows a RAM in which the application program of the POS terminal has been stored;

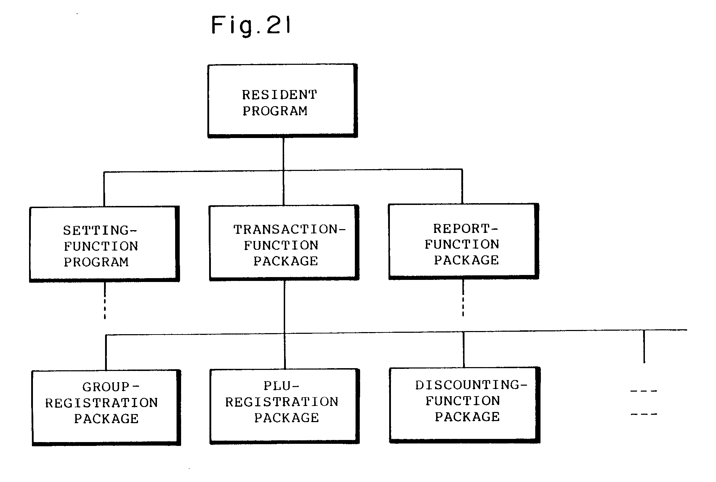

Fig. 21 shows the structural relationship among application program packages;

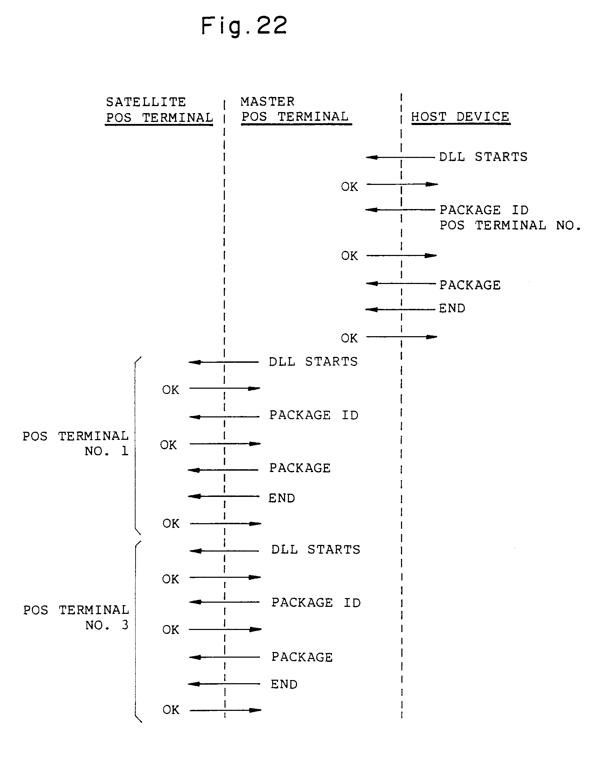

Fig. 22 shows the manner in which an application program is down-line loaded from a host device to a master POS terminal, as well as the manner in which an application program is down-line loaded from the master POS terminal to a satellite POS terminal; and

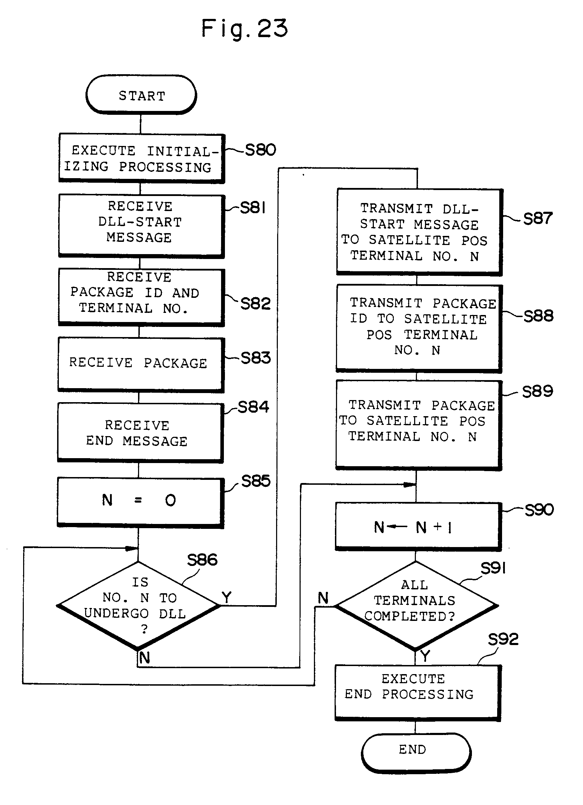

Fig. 23 is a flowchart showing the procedure of processing for transmitting and receiving an application program in a master POS terminal;

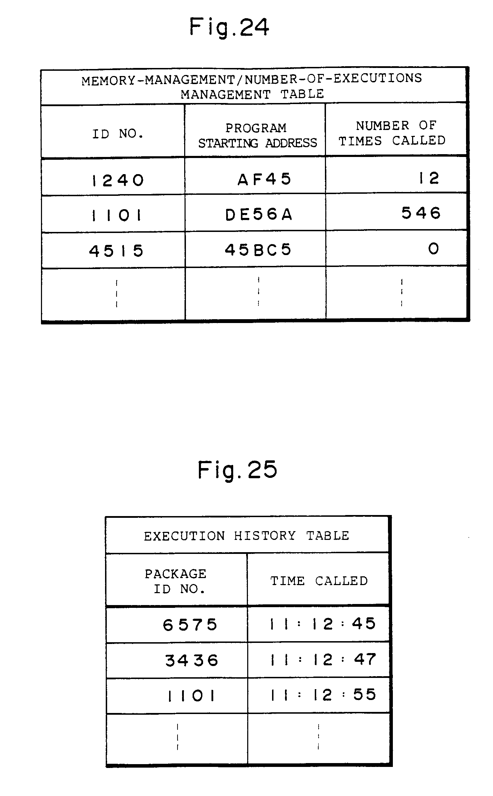

Figs. 24 through 26 illustrate an embodiment of a fifth aspect of the present invention (namely a fifth embodiment thereof), in which:

Fig. 24 shows a memory-management/number-of-executions management table provided in a RAM of a POS terminal;

Fig. 25 illustrates an execution-history table provided in a RAM of a POS terminal; and

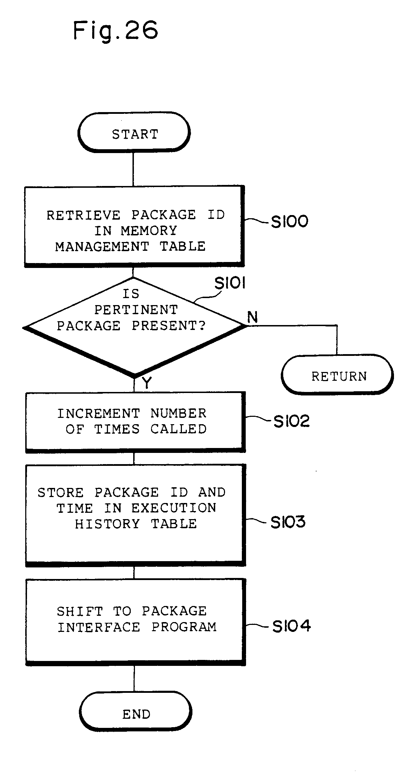

Fig. 26 is a flowchart illustrating a processing procedure in accordance with a package-supervisor program in a POS terminal;

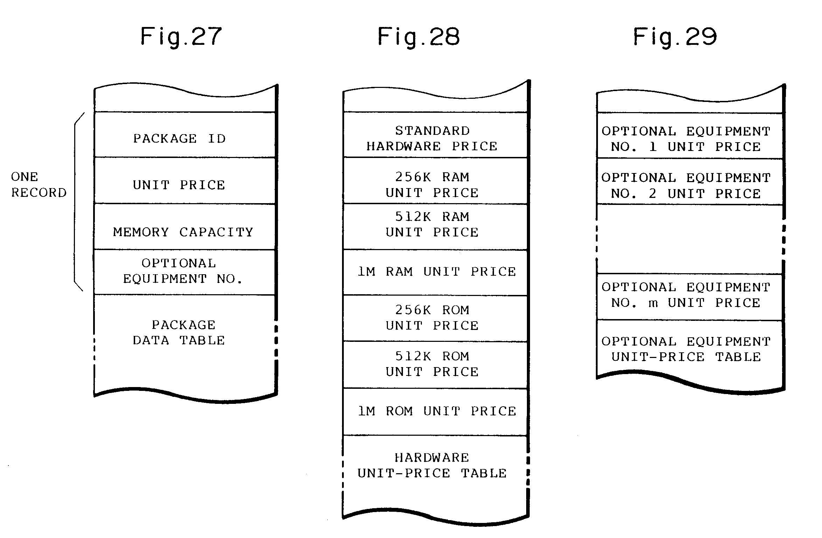

Figs. 27 through 30 illustrate an embodiment of a sixth aspect of the present invention (namely a sixth embodiment thereof), in which:

Figs. 27, 28 and 29 respectively illustrate a package-data table, a hardware unit-price table and an optional equipment unit-price table provided in a RAM of a program creating apparatus; and

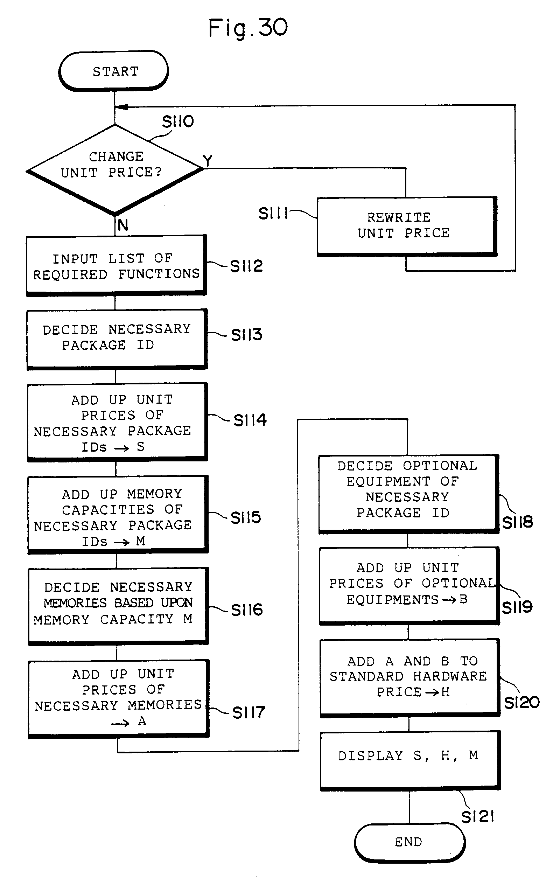

Fig. 30 is a flowchart illustrating a processing procedure for estimating price in an application program creating apparatus.

## Best Mode for Carrying Out the Invention

### First Embodiment

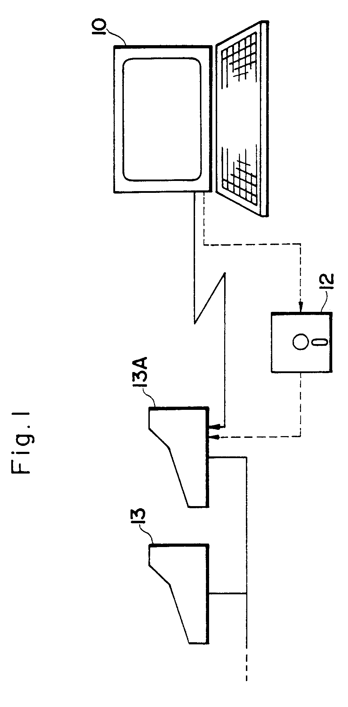

A first embodiment of the present invention will now be described with reference to Figs. 1 through 5.

Fig. 1 is a block diagram showing the construction of a POS (point-of-sales) terminal system which includes an application program creating apparatus.

An application program creating apparatus 10 is used in common for a large number of stores. Since a store is a customer as seen from the side which supplies the application program, in this embodiment a store shall be referred to as a customer.

In general, a plurality of POS terminals are installed in each store. One of the plurality of POS terminals installed in one store is a master terminal 13A, and the others are satellite terminals 13. In general, the same application program is loaded in the plurality of POS terminals installed in one store. In exceptional cases, the application program loaded in a certain POS terminal and the application programs loaded in other POS terminals differ wholly or in part even in the same store. For example, there are instances where the application programs loaded respectively in a master POS terminal and in a satellite POS terminal differ in part. In this embodiment, it is assumed that a plurality of POS terminals in which exactly the same application programs are loaded have the same POS terminal ID (identification) numbers assigned thereto. This ID number is an ID number for supply of the application program and in concept is different from a terminal number for sales management and the like.

In each store, the plurality of satellite POS terminals 13 are connected to the master POS terminal 13A by a private branch line. The master POS terminal 13A is connected to the application program creating apparatus 10 by a public telephone line or leased line. As will be set forth later, various data which include an application program and a memory management table are transmitted to the master POS terminal 13A from the application program creating apparatus 10. When necessary, the memory management table is transmitted from the master POS terminal 13A to the application program creating apparatus 10.

The master POS terminal 13A acts as a relay device for transmission of the application program and memory management table between the satellite POS terminals 13 and the application program creating apparatus 10. For example, in a case where an application program transmitted from the application program creating apparatus 10 to the master POS terminal 13A is destined for the satellite POS terminals 13, the master POS terminal 13A distributes the received application program to the requisite satellite POS terminals 13. Instead of the master POS terminal 13A, a host computer which performs totalizing or statistical processing of sales proceeds can be provided with the relay function between the POS terminals and the application program creating apparatus.

The application program can also be loaded from the application program creating apparatus 10 to the POS terminal 13 or 13A using a floppy disk. In this case, it is preferred that the memory management table, discussed below, be preserved within the application program creating apparatus. Alternatively, the memory management table is exchanged between the application program creating apparatus 10 and the POS terminal 13 or 13A using the floppy disk 12.

In the description that follows, a POS terminal shall be referred to simply as the POS terminal 13 if it is unnecessary to distinguish between master and satellite POS terminals.

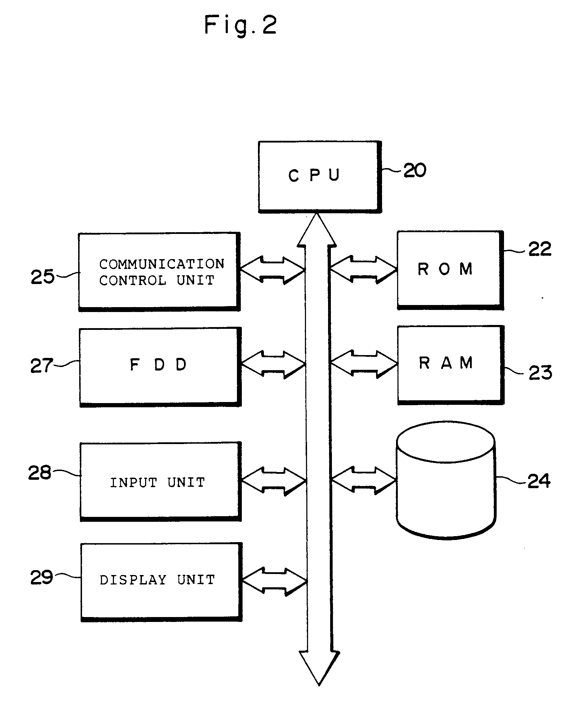

Fig. 2 is a block diagram showing the construction of the application program creating apparatus 10.

The operation of the application program creating apparatus 10 is under the overall control of a CPU 20. Connected to the CPU 20 via a bus are a ROM 22, a RAM 23, a library 24, a communication control unit 25, a floppy disk drive 27, an input device 28 such as a keyboard, and a display unit 29. The ROM 22 stores the execution program of the CPU 20. A memory management table, described below, is set in the RAM 23. The library 14 is constituted by a hard disk device and stores a plurality of application program packages (hereinafter referred to simply as "application packages"). The communication control unit 25 communicates with the master POS terminal 13A via a public telephone line or leased line.

The construction of the POS terminal 13 is well known and a detailed description thereof is not necessary here. Only the minimum necessary particulars will be discussed. The POS terminal 13 is equipped with a ROM and a RAM. A resident program is stored in the ROM in advance. The resident program is for controlling the basic processing carried out by the POS terminal and, by way of example, includes an input processing program for processing acceptance of inputs, a program for executing processing to load the application program, a sales registration processing program, a report creating program, a self-diagnosing program for checking hardware, and a package interface program described in the third embodiment, set forth below. The application program supplied from the application program creating apparatus 10 and loaded is stored in the RAM.

The application program is put into the form of packages classified by function. Such a package is the aforementioned application package. Functions implemented in the form of application packages are a discounting function 1 (discounting when a credit card is used), a discounting function 2 (discounting based upon time zone), a price revising function (where price is decided depending upon payment in lump sum or in installments), a consumption-tax calculating function, a tax calculating function for the USA, a tax calculating function for Europe, etc.

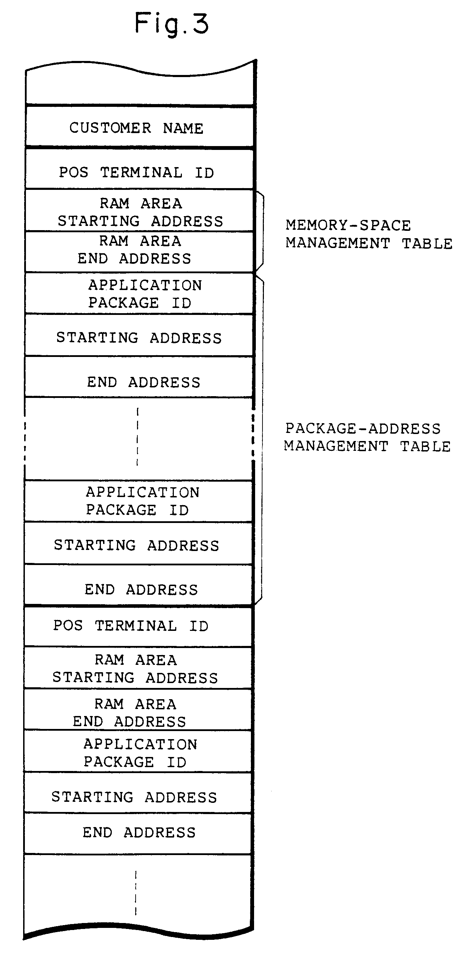

Fig. 3 illustrates an example of a memory management table set in the RAM 23 in the application program creating apparatus 10.

The memory management table is created for every different POS terminal ID number at each customer and is composed of a memory-space management table and a package-address management table.

The starting and end addresses of the entire area of the RAM provided in the POS terminal to which the ID number of the POS terminal is assigned are set in the memory-space management table. If necessary, the starting and end addresses of the entire area of the ROM provided in this POS terminal may also be set in the table.

With regard to all application packages stored in the RAM of the POS terminal, their ID numbers, starting addresses and end addresses are set in the package-address management table. The starting and end addresses are the starting and end addresses of the storage areas in which the application packages are stored in the RAM within the POS terminal.

By referring to the memory management table, the application program creating apparatus 10 is capable of judging which application package has been stored in what storage area of the RAM in each POS terminal, as well as the volume of the application package. The memory management table is referred to and updated when an application package is deleted or added. What is updated is solely the package-address management table.

After an application package is transmitted from the application program creating apparatus 10 to the POS terminal 13, the memory management table transmitted to the same POS terminal 13 is stored in its RAM. In a case where an application program is to be altered, the memory management table is transmitted to the application program creating apparatus 10 from the POS terminal 13 whose application program is to be altered. In a case where an application package is loaded in the POS terminal through a floppy disk, it is preferred that the memory management table be preserved within the application program creating apparatus 10, as mentioned above.

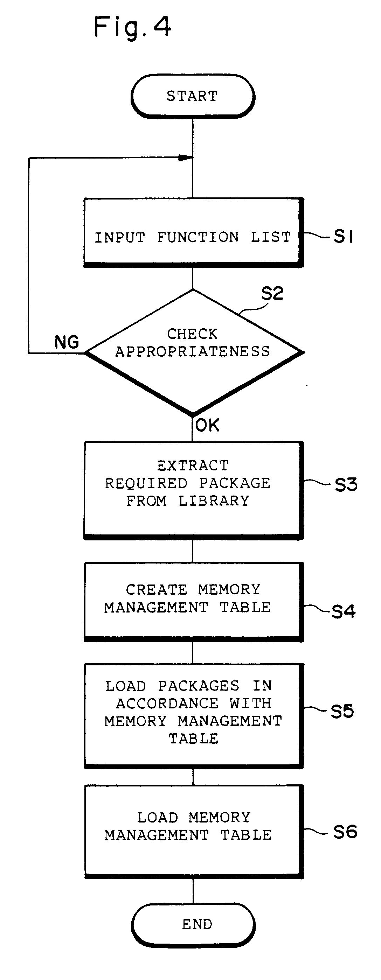

Fig. 4 illustrates a procedure through which, when no application program at all have as yet been set in the RAM of a POS terminal, the application program creating apparatus 10 creates, and loads in the POS terminal, an application program suited to the POS terminal.

In the application program creating apparatus 10, a list of the functions (the functions of the application packages) to be set in a POS terminal that is the subject of application program creation is inputted in the application program creating apparatus 10 (step S1). It is desired that the list be inputted in accordance with a menu displayed on the display unit 29 of the application program creating apparatus 10.

When the function list is inputted, a check is made in the apparatus 10 to determine whether the inputted functions do not contradict one another (step S2). For example, in a case where two types of discounting functions have been inputted, the two discounting functions would conflict with each other if the time zones of the discounts were the same but the discount rates were different. As a result, a judgment would be made to the effect that this is inappropriate. When such a judgment is made, a display to this effect is presented and, hence, the processing for inputting the list of functions is repeated.

In the check for appropriateness, it is preferred that a check of memory capacity also be performed. More specifically, the volume of the application packages for implementing all of the inputted functions and the memory capacity of the RAM in the POS terminal 13 are compared, and storage of the list is judged to be inappropriate if the memory capacity of the RAM is not adequate for storing all of these application packages. In this case also, the system returns to entry of the function list and the functions are inputted again.

If there is no conflict among the plurality of inputted functions, the application packages for implementing the respective inputted functions are extracted from the library 24 (step S3) and the sequence of this array is decided. In general, the sequence of an array of a plurality of application packages may be random. For every application package, the volume of the program has been decided. Therefore, if the sequence of the array is determined, then disposition in the RAM within the POS terminal 13 is decided, and so are the starting and end addresses of each application package. The plurality of application packages are arrayed while being packed (i.e., without forming any blank areas) in the RAM of the POS terminal 13. The package-address management table relating to the POS terminal is thus produced. Since the memory capacity of the RAM in a POS terminal is set in advance or is transmitted from the POS terminal, memory-space management table also is completed (step S4).

The application packages extracted from the library 24 are loaded (step S5) in the POS terminal 13 in accordance with the created memory management table, and the memory management table is loaded in the POS terminal 13 (step S6).

There are two ways to load application packages and a memory management table in a POS terminal. One is to transmit them to the POS terminal 13 from the communication control unit 25 of the application program creating apparatus 10 through a line. The other is to write the application packages and the memory management table in the floppy disk 12 by the floppy disk drive 27. The floppy disk 12 is loaded in the POS terminal 13, in which the application packages, etc., that have been written in the floppy disk 12 are read. In a case where the application packages are loaded in the POS terminal 13 via the floppy disk 12, step 36 in Fig. 4 may be deleted. In such case, the memory management table is preserved in the RAM 23 of the application program creating apparatus 10.

In the loading of the application packages and memory management table in the POS terminal 13, the application packages are stored in the RAM of the pertinent POS terminal in accordance with the package-address management table of the memory management table.

The POS terminal 13 performs operations in accordance with the resident program stored beforehand in the ROM thereof and the application program (application packages) loaded in the RAM. Linking between the resident program and the application program, as well as linking between application programs, will be described in the third embodiment.

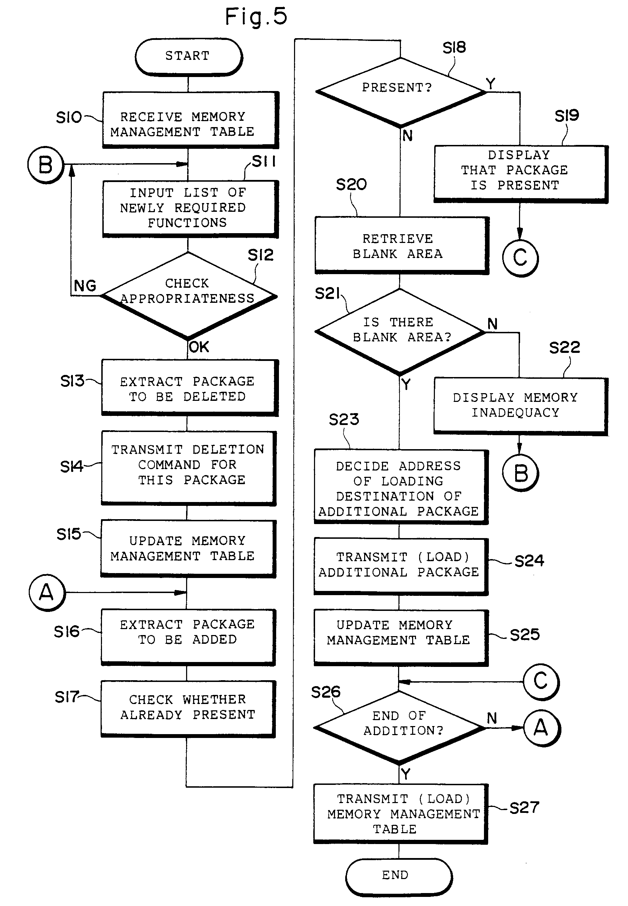

Fig. 5 is a flowchart showing operation in a case where an application program that has already been loaded in the POS terminal 13 is altered in the application program creating apparatus 10. In the flowchart, the application program creating apparatus 10 communicates with the POS terminal 13 through a line.

First, the application program creating apparatus 10 sends the POS terminal 13 whose application program is to be altered a command for transmission of the memory management table. In response to this command, the POS terminal 13 transmits the memory management table that has been stored in its RAM to the application program creating apparatus 10. As a result, the application program creating apparatus 10 receives the transmitted management table and stores it in the RAM 23 (step S10).

Next, the newly required function list, which includes new functions to be set in the POS terminal 13 and functions to be deleted, is inputted from the input unit 28 (step S11). A check for the appropriateness of this newly requested function list is carried out in the same manner (step S12).

The newly required function list that has been inputted and the memory management table received at step S10 are compared, and the application packages to be added and those to be deleted are extracted (step S13).

In order to delete an unnecessary application package to enlarge the memory area in which data is capable of being stored in the RAM of the POS terminal 13, a command calling for deletion of the application program to be deleted is transmitted to the POS terminal 13 (step S14). In response to the deletion command, the designated application package is erased from the RAM in the POS terminal 13.

In the application program creating apparatus 10, data relating to a deleted application package is erased from the package-address management table and the memory management table is updated (step S15).

In the application program creating table 10, an application package to be added is then extracted from the library 24 (step S16) and reference is made to the memory management table to check whether this application package has already been loaded in the POS terminal 13 (step S17). If the application package has already been loaded in the POS terminal 13 (ordinarily, errors of this kind do not readily occur), a display to the effect that the application package already exists is presented on the display unit 29 and processing for adding this application package is not performed (steps S18, S19). Thereafter, if there is still an application package to be added, the program returns to step S16 (step S26).

If an application package to be added still has not been loaded in the POS terminal 13, the volume of this application package and the capacity of a blank area of the RAM in POS terminal 13 judged by the memory management table are compared, and an area of the RAM in which the application package is to be loaded is retrieved (step S20). If there is a blank area in which loading is to take place in the RAM of the POS terminal 13 (step S21), the destination at which the application package is to be loaded is decided to be the blank area (step S23). This destination address for loading and the application package to be added are transmitted to the POS terminal 13 (step S24). Therefore, the received application package is stored at the designated address of the RAM in the POS terminal 13. In the application program creating apparatus 10, the data relating to the added application package are stored in the memory management table and the memory management table is updated (step S25).

In a case where the RAM of the POS terminal 13 does not possess a blank area in which an application package to be added is capable of being loaded, a display to the effect that the capacity of the RAM is inadequate and the application package is incapable of being loaded is presented on the display unit 29 (step S22). In such case, the program would return to step S11 and the list of newly required functions would be inputted again.

The foregoing processing is repeated with regard to all application packages to be added (step S26).

An arrangement may be adopted in which the check for determining whether a application package to be added already has been loaded in the POS terminal, and the check for determining whether the RAM of the POS terminal possesses a capacity capable of storing all application packages to be added, are performed in the processing for the appropriateness check at step S12.

When processing regarding all application packages to be added ends, the updated memory management table is transmitted to the pertinent POS terminal 13 from the application program creating apparatus 10, and the table is stored in the RAM of the POS terminal 13 (step S27).

It goes without saying that the command for deleting an application package and an application package to be added can be loaded from the application program creating apparatus 10 to the POS terminal 13 through a floppy disk.

Second Embodiment

In the first embodiment described above, the application program creating apparatus executes processing for determining whether the RAM provided in the POS terminal possesses a blank area capable of storing an application package, and for deciding the destination address for loading of the application package.

The second aspect of the present invention is so adapted that such processing is executed by the POS terminal. The application program creating apparatus 10 supervises only the ID numbers of application packages already loaded in each POS terminal.

An embodiment of the second aspect of the invention will be described with reference to Figs. 6 through 10.

In the second embodiment also, the POS terminal system shown in Fig. 1 and the construction of the application program creating apparatus illustrated in Fig. 2 apply as is.

As set forth earlier, the construction of the POS terminal 13 is well known. Here, however, an outline of the electrical constitution of the terminal will be described with reference to Fig. 6.

The overall operation of the POS terminal 13 is controlled by a CPU 30. A ROM 32 in which a resident program is stored, a RAM 33 for storing application packages, a communication control unit 34 for communicating with the application program creating apparatus 10 and a floppy disk drive 35 are connected to the CPU 30 by a bus. The POS terminal 13 further includes a display unit 36 for displaying data relating to transactions (commodity price, total price, change, tax, etc.), a keyboard 37 for inputting the data relating to transactions, and a printer 38 for printing a receipt or journal. These are connected to the CPU 30 by the bus.

Fig. 7 illustrates a package management table provided in the RAM 23 of the application program creating apparatus 10. For every different POS terminal ID number, ID numbers of all application packages stored in the RAM of the POS terminal are set in the package management table. This is done for each customer.

Fig. 8 shows a package-address management table and a blank-area management table set in the RAM 33 of the POS terminal 13.

The package-address management table comprises, for every application package that has been stored in the RAM 33, the ID number of the application package as well as the starting address and end address of the storage area within RAM 33 in which this application package has been stored.

Set in the blank-area management table are the starting address and end address of a storage area in the RAM 33 that is blank (i.e., in which application packages have not been loaded). In addition, a memory-space management table, which includes the starting and end addresses of all areas of the RAM 33 is provided in the RAM 33 if necessary.

Fig. 9 is a flowchart showing an operation performed when the application program creating apparatus 10 loads all necessary application packages in a POS terminal (i.e., when initial loading is executed, which corresponds to Fig. 4), and when the application program creating apparatus 10 alters an application package that has already been loaded in a POS terminal (i.e., when an unnecessary application package is deleted and a necessary application package is added, which correspond to Fig. 5).

First, a list of functions required for the POS terminal 13, which is to be subjected to initial loading of application packages or alterations of application packages, is inputted (step S30). A check of the appropriateness of the inputted list of required functions is performed (step S31).

Next, the inputted list of required functions and the package management table regarding the pertinent POS terminal are compared and, based upon the comparison, application packages to be deleted and application packages to be added are decided (steps S32, S33). At the time of initial loading, application packages to be deleted do not exist.

If there is one application package to be deleted or a plurality thereof, a message which includes the ID number of the application package to be deleted and a command indicating that this application package is to be deleted are sent to the pertinent POS terminal 13 from the application program creating apparatus 10 (step S34). The POS terminal 13 which has received this message performs processing for deleting the designated application package in a manner described below.

The above-mentioned message contains the ID number of the POS terminal indicating the destination, and it goes without saying that only the pertinent one or plurality of POS terminals performs processing in accordance with this message. As set forth above, the master POS terminal 13A acts as a relay device between the plurality of satellite POS terminals 13 and the application program creating apparatus 10. In a case where a plurality of satellite POS terminals 13 designated by one POS terminal ID number exist, the master POS terminal 13A would send the aforementioned message to these satellite POS terminals in succession. The relay processing for response from the satellite POS terminals 13 to the application program creating apparatus 10 and for transmission of application packages from the application program creating apparatus 10 to the plurality of satellite POS terminals 13 is similarly carried out by the master POS terminal 13A. This relay processing of the master POS terminal 13A will be described in detail later in the fourth embodiment. In order that the relay processing of the master POS terminal 13A will be executed smoothly, it will suffice for the application program creating apparatus 10 to provide the master POS terminal 13A with the terminal numbers of the POS terminals 13 that are to receive the message (not the ID numbers for supplying the application programs but numbers specific to the individual POS terminals for proceeds management, etc.).

Following transmission of the delete command, the decided single application package or the plurality thereof to be added is read out of the library 24 (step S35). The application package to be added is transmitted to the pertinent POS terminal 13 along with the load command (step S36).

The POS terminal 13 which has received the delete command and the application package to be added transmits a response message to the application program creating apparatus 10, and therefore the response message is checked (step S37).

If the response message indicates that an application package to be added has been loaded normally in the RAM 33 of the pertinent POS terminal 13 (YES at step S38), the package management table relating to the pertinent POS terminal is updated (step S39) and an end command is transmitted to the pertinent POS terminal 13, whereby processing is ended. In the processing for updating the package management table, the ID number of an application package for which deletion has been decided is erased from the package management table, and the ID number of an application package for which addition has been decided is added to the package management table.

In a case where a response message indicating an abnormality of some kind is transmitted from the pertinent POS terminal 13 (NO at step S38), the message is analyzed and the kind of abnormality that has occurred is determined (step S40). In a case where the RAM 33 of the pertinent POS terminal 13 does not have enough blank area to enable loading of an application package to be added (YES at step S41), the list of required functions is inputted again (YES at step S41). In a case of another error, such as a transmission error (NO at step S41), the application package to be added is re-transmitted to the pertinent POS terminal 13 along with the load command.

Fig. 10 illustrates the processing procedure of the CPU 30 in the POS terminal 13.

When some command is received from the application program creating apparatus 10 directly or via the master POS terminal 13A (step S50), it is determined whether the command is the load command, the delete command or the end command (steps S51, S52, S53, S66).

In case of the delete command, the ID number or numbers of the single or plurality of application packages to be deleted is attached to the message containing this command, and therefore the application package or packages designated for deletion will be erased from the RAM 33 (step S54).

Another application package is shifted to the blank area of the RAM 33 produced by deletion of the application package, and blank areas dispersed about the RAM 33 are grouped together at one location (step S55).

By writing the starting and end addresses of one blank area formed by thus rearranging the application packages in the RAM 33 in the blank-area management table, the latter is updated (step S56). Furthermore, the package-address management table is updated (step S57) so as to reflect the arrangement of the application packages in RAM 33 formed anew by the above-described processing for deleting and the processing for rearranging the application packages.

In a case where the command provided by the application program creating apparatus 10 is the load command, one or a plurality of application packages transmitted in a form attached to the load command will be received (step S58). By referring to the blank-area management table, it is determined whether the capacity of the blank area is sufficient for storing one single or plurality of application packages received (steps S59, S60).

If the RAM 33 possesses a blank area sufficient for storing a received application package to be added (YES at step S60), the received application package is stored in the blank area (step S61). The blank area is narrowed by loading of the application package to be added. The blank-area management table is updated using the address data indicative of the remaining blank area (step S62). Further, the package-address management table is updated (step S63) by writing the ID number of an additionally loaded application package as well as the starting and end addresses of the storage area in which this application package has been loaded in this table. A response message indicating that processing for additional loading of an application package has ended normally is transmitted to the application program creating apparatus 10 (step S64).

In a case where there are a plurality of application packages to be added, it is permissible for the application packages to be sent from the application program creating apparatus 10 to the POS terminal 13 one at a time.

If, as a result of making reference to the blank-area management table, it is found that there is absolutely no blank area or that a blank area is not sufficient for storing a received application package (NO at step S60), an error-response message to this effect is transmitted from the POS terminal 13 to the application program creating apparatus 10 (step S65).

If an end command is sent from the application program creating apparatus 10, all processing is terminated (step S66). As long as a received command is not the load command, delete command or end command, the fact that the command is abnormal is transmitted from the POS terminal 13 to the application program creating apparatus 10 (step S67).

Third Embodiment

An embodiment of a third aspect of the present invention will be described with reference to Figs. 11 through 16.

The third aspect of the invention relates to linking the aforementioned plurality of application programs together as well as the linking between an application program and a resident program.

Fig. 11 illustrates the construction of an electronic cash register system. In this embodiment, an electronic cash register (hereinafter referred to as an "ECR") is illustrated as one example of a POS terminal.

A plurality of ECRs are installed in one store; one is a master ECR 43A, and the others are satellite ECRs 43. If it is unnecessary to distinguish between a master ECR and its satellite ECRs, all of these shall be referred to simply as ECR 43 in this embodiment as well.

The plurality of ECRs 43 are interconnected by a private branch line. The master ECR 43A is connected to a host device 40 through a public telephone line or a leased line. In this embodiment also, the master ECR 43A acts as a relay device for communication between the satellite ECRs 43 and the host device 40.

The host device 40 collects totalization data indicative of proceeds and the like from the ECR 43 and manages these data, and performs an operation such as down-line loading application packages in order to alter application programs, which becomes necessary when the operating specifications of the ECR 43 change. The host device 40 possesses the functions of the application program creating apparatus, described earlier.

Fig. 12 is a block diagram showing the electrical construction of the master ECR 43A. The master ECR 43A includes a CPU 50 for overall control of the entire operation. Connected to the CPU 50 via a bus are a ROM 51, a RAM 52, a clock signal generating circuit 53, a keyboard 54, a display unit 55, a printer 56, an in-line interface 57 and an on-line interface 58.

With the exception of the fact that the on-line interface 58 is not provided, the satellite ECR 43 has a construction identical to that of the master ECR 43A.

The keyboard 54 is for inputting transaction data (commodity codes, prices, etc.). Inputted transaction data and calculated transaction data (total price, change, etc.) are displayed on the display unit 55. The printer 56 prints out the transaction data in a receipt or journal.

The in-line interface 57 is connected to the private branch line and controls communication with the other ECRs 43. The on-line interface 58 is connected to a public telephone line or a leased line and controls communication with the host device 40.

The aforementioned resident program for controlling the basic operation of the ECR 43 is stored in the ROM 51 in advance, as illustrated in Fig. 13. A package interface program for linking application packages is included in a part of the resident program.

As shown in Fig. 14, the RAM 52 is provided with an area used as a memory management table, a package area for storing a plurality of application packages, and a file area for storing data (e.g., transaction data, etc.) shared by a plurality of application packages.

As mentioned above, the application packages, which are for implementing respective ones of individual functions such as discounting processing, taxing processing and processing for creating receipt formats, are independent of one another. Each application package has an ID number appended thereto. The ID numbers are represented by 1, 2, ..., n in Fig. 14. More specifically, an application package comprises the application program per se and data used by the application program (the data, which includes constants and the like, are referred to as local data). The application program and local data are stored for each ID number of an application package. An area for storing the local data is used also as a work area.

In an area in which an application package i (i = 1 ~ n) has been stored, let adai represent the starting address of the location at which the application program is stored, and addi represent the starting address of the location at which local data are stored. The starting address ada1 of the area in which the leading application package (application package 1 in Fig. 14) is stored is the starting address of the package area. Application packages are stored successively from the starting address ada1 in the direction of increasing address values. The end address addc of the final application package (application package n in Fig. 14) is the current address of the package area. In the package area, the area from the current address onward generally is a blank area. In a case where an application package is added, the application package to be added is stored from the address following the current address addc.

The bottom address of the file area is the starting address of the file area. That is, data are stored in the file area backwardly in the direction of decreasing address values. The address having the smallest value at a location where data in the file area are stored is a current address adfc. New data are stored with addresses running backward from the location at an address that is one smaller than the current address adfc.

The above-mentioned addresses adai, addi, addc, adfs and adfc are absolute addresses of the RAM 52.

The details of the memory management table are as shown in Fig. 15. The starting address ada1 and the current address addc of the package area, as well as the starting address adfs and the current address adfc of the file area, are stored in the memory management table. Further, the memory management table stores data relating to each application package that has been stored in the RAM 52. The data relating to the application package include the ID number of the application package, the program starting address adai of the area of RAM 52 in which this application package has been stored, and the local-data starting address addi.

A relative address is used as the address of the location to be accessed described in the application program of each application package. The relative address is determined in such a manner that the location at which the statement at the head of the application program would be stored will be address 0, that the location at which the data at the head of the local data would be stored will be address 0, and that the addresses will increase for every location at which an ensuing statement or data would be successively stored. Accordingly, in a case where storage locations within the package area in RAM 52 are accessed in accordance with the application program (i.e, in a case where storage locations are accessed in order to jump program addresses, read out data or store data), the relative address described in the program is added to the starting address adai of the application program or the starting address addi of the local data, whereby the absolute address of the target storage location in RAM 52 is calculated.

Fig. 16 is a flowchart showing a so-called function (subroutine) call operation in which, during the execution of processing by the CPU 50 in accordance with a certain application package i, a transition is made to processing in accordance with another application package j and then the original application package i is returned to at the end of this processing.

Assume that when the CPU 50 is executing processing in accordance with an application program within an application package i (step 570), an instruction for shifting to another application package j is read out (step S71). This instruction is given in the form of a function referred to as "pacall" (PID, a, b, c). The parameter PID indicates the ID number of the application package j to which the shift is to be made. In this embodiment, PID designates j and, hence, it represented by Pj in Fig. 16. The parameters a, b, c are data for executing processing in accordance with the application package j.

The package interface program within the resident program in ROM 51 is called by the instruction pacall. This package interface program has been stored in an area having a predetermined address in ROM 51.

The CPU 50 executes the following processing in accordance with this package interface program: Specifically, the CPU 50 refers to the memory management table to retrieve an application program starting address adaj of an application package having an ID number which coincides with the parameter PID (Pj) in the instruction pacall. This address adaj is read out of the memory management table (step S73). Control then jumps to the address adaj that has been read out (step S74).

Since the program of application package j has been stored in the RAM 52 with the absolute address adaj serving as the starting address, processing in accordance with the application program within this application package j is executed using the parameters a, b and c (step S75). In this processing of application program j (and similarly in processing in accordance with application program i), the relative address within the program is added to the starting address adaj or addj, whereby the storage location in RAM 52 that is to be accessed is designated. This is as set forth earlier.

When the prescribed processing within the application package j ends and the return instruction is read out, the control returns to the application program i and processing in accordance with this application program i resumes (step S72).

Thus, when there is a jump from a certain application program to another application program, this is always performed via the package interface program within the resident program. Further, since the memory management table is provided and the absolute address of the area in RAM 52 at which a application package has been stored has been set in the memory management table, the absolute address of the application package to which the jump is to be made is known in the processing in accordance with the package interface program. Furthermore, in an application program, used is made of a relative address in which the starting address of the application program serves as a base. Thus, the linking of mutually independent application packages is achieved and execution of application programs becomes possible irrespective of the positions at which the application packages are arrayed in the RAM.

As mentioned above, the resident program is composed of an input processing program, a program for processing through which application packages are loaded and a package interface program, etc. These programs also are put into the form of packages. Accordingly, the linking together of the individual programs constituting the resident program also can be realized by the above-described method.

Fourth Embodiment

An embodiment of the fourth aspect of the present invention will now be described with reference to Figs. 17 through 23.

The fourth aspect of the present invention relates to transmission (down-line loading) of application programs from a host device (host computer) to a plurality of terminal devices.

In this embodiment, a POS terminal system is again illustrated. The POS terminal system basically is the same as that shown in Fig. 1, and the construction of the POS terminal basically is the same as that depicted in Fig. 6. These are illustrated in Figs. 17 and 18, respectively, in a form suited to this embodiment of the invention.

It assumed that a single company possesses a plurality of stores. As shown in Fig. 17, a plurality of POS terminals are installed in each store; one is a master POS terminal 13A, and the others are satellite POS terminals 13. If it is unnecessary to distinguish between a master POS terminal and its satellite POS terminals, all of these shall be referred to simply as POS terminal 13.

The plurality of POS terminals 13 in each store are interconnected by a private branch line. The master POS terminal 13A is connected to a host device (host computer) 11 through a public telephone line or a leased line. The master POS terminal 13A acts as a relay device for communication between the satellite POS terminals 13 and the host device 11. The host device 11 is installed at main office of the company.

The host device 11 collects totalization data indicative of proceeds and the like from the POS terminals 13 and manages these data, and it also performs operations such as down-line loading initial application packages in the POS terminals 13, as well as down-line loading of application packages to be added when the operating specifications of the POS terminals 13 change. The host device 11 possesses the functions of the application program creating apparatus, described earlier.

Data inclusive of application packages are transmitted from the host device 11 to the master POS terminal 13A and to the satellite POS terminal 13 in the order mentioned. In this embodiment, the host device 11, the master POS terminal 13A and the satellite POS terminals 13 define a three-tiered arrangement. However, an arrangement based upon a larger number of tiers is permissible.

Fig. 18 is a block diagram showing the electrical construction of each POS terminal 13. The POS terminal 13 includes a CPU 60 for overall control of the entire operation. A ROM 61, a RAM 62, a keyboard 64, a display unit 65, a printer 66 and a communication control unit 67 are connected to the CPU 60 via a bus.

The keyboard 64, which is for inputting transaction data (commodity codes, prices, etc.), includes a commodity keys, group keys, numeric keys, etc.. Inputted transaction data and calculated transaction data (total price, change, etc.) are displayed on the display unit 65. The printer 66 prints out the transaction data in a receipt or journal.

The communication control unit 67 provided in the master POS terminal 13A controls communication with the host device 11 and communication with the satellite POS terminals 13. The communication control unit 67 provided in each satellite POS terminal 13 controls communication with the master POS terminal 13A.

As shown in Fig. 19, a resident program for controlling the basic operation of the POS terminal 13 is stored in the ROM 61 in advance.

The RAM 62 includes a data area which stores proceeds data and totalization data, and a package area which stores a plurality of application packages. An example of the contents of a package area is illustrated in Fig. 20.

The subdividing of the resident program and application packages in this embodiment differs slightly from that in the foregoing embodiments.

In this embodiment, the resident program includes a start-up program for starting up the POS terminal, the above-described application interface program, a self-diagnosing program and a program for application-program loading processing.

On the other hand, the application program includes the input processing program, the proceeds-registration processing program and the report creating program, which were grouped in the resident program in the foregoing embodiments.

Thus, whether a certain program is incorporated in the concept of a resident program or the concept of an application program is entirely optional. It will suffice if the resident program includes, at minimum, the program for starting up the POS terminal and the application interface program.

An application program (application package) in this embodiment may be classified roughly into a setting-function program (setting-function package) for setting the array and functions of various keys, a transaction-function program (transaction-function package) which controls input processing and basic operations such as proceeds registration (inclusive of calculation of total price and change) and a report creating program (report-function package). The transaction-function package is accompanied by a program (group-registration package) for registering group, a program (PLU-registration package) for registering PLU (price look-up), and a program (discount-function package) used when discounting is performed. The setting-function package and the report-function package are also similarly accompanied by application packages for stipulating more detailed processing. Fig. 21 illustrates the structural relationship among the resident program and application programs.

Application packages are stored in the RAM 62 in any optional array, just as in the foregoing embodiments. Each application package is described using relative addresses that are valid within its own program, as in the third embodiment. The application packages, which are linked together by an application interface program within the resident program, operate in cooperation with one another.

After the introduction of electric power, the POS terminal is started by the resident program. If there is a subsequent input from a key, any of the setting-function package, transaction-function package and report creating function are called in response to the key input. If the transaction-function package is called, the category-registration package, PLU-registration package or the discount-function package is called in dependence upon the contents of processing during execution of the operation in accordance with this package. This is the manner in which the POS terminal operates.

The host device 11 has a construction which basically is the same as that shown in Fig. 2.

Fig. 22 shows the manner in which down-line loading (hereinafter referred to as "DDL") of an application package from the host device 11 to the satellite POS terminal 13 is carried out via the master POS terminal 13A.

Each application package is equipped with an ID number in a manner similar to the foregoing embodiments. Further, a Terminal No. is assigned to every one of the POS terminals. The Terminal No. is a number which differs for each POS terminal and, in this embodiment, consecutive numbers starting from 0 are used. The Terminal No. is different from the terminal ID number mentioned in the first embodiment.

Fig. 23 illustrates a communication processing procedure in the master POS terminal 13A. Processing for DDL of application packages from the host device 11 to the satellite POS terminal 13 will be described with reference to Fig. 22, centering on the operation of the master POS terminal 13A illustrated in Fig. 23.

After initializing processing is performed (step S80), a message to the effect that DLL will begin is sent from the host device 11, and therefore this is received (step S81). If there is no abnormality, such as an error, the master POS terminal 13A sends back OK (ACK) to the host device 11.

Next, the ID number of the application package to undergo DDL and the Terminal No. of the satellite POS terminal to which loading is directed are sent from the host device 11, and these are received (step S82). The application package to undergo DDL refers to a package that is to be newly in or added to the satellite POS terminal 13. If there are a plurality of such packages, the ID numbers of all of them are transmitted from the host device 11. Further, if there are a plurality of satellite POS terminals 13 in which application packages are to be loaded, all of the Terminal Nos. are transmitted from the host device 11.

If the OK message is sent from the master POS terminal 13A to the host device 11 after receipt of the ID number of the application package and the Terminal No. of the satellite POS terminal, the application package is then transmitted from the host device 11. This is received and is stored in a buffer area of the RAM 62 (step S83). In case of a plurality of application packages, it may be arranged so that these are transmitted one at a time or so that a plurality of application packages are transmitted in continuous fashion.

In any case, when transmission of all application packages ends, the host device 11 transmits an end message. When the master POS terminal 13A receives the end message (step S84), it sends an OK message back to the host device 11. As a result, communication between the host device 11 and the master POS terminal 13A ends.

Next, the master POS terminal 13A makes a transition to communication with the satellite POS terminal 13. The Terminal No. of the satellite POS terminal 13 in which the received application package is to be loaded has already been received. First, a pointer for designating the Terminal No. of the satellite POS terminal 13 is set to 0 (step S85).

It is determined whether the satellite POS terminal 13 having the Terminal No. indicated by the point N is to undergo DDL of the application program (step S86).

If the satellite POS terminal 13 designated by the pointer N is to undergo DDL, a message to the effect that DDL is to be begin is sent to this satellite POS terminal (Terminal No. N) from the master POS terminal 13A (step S87). When an OK message is sent back from the pertinent satellite POS terminal 13, the ID number of the application package for DDL is transmitted to this satellite POS terminal 13 (step S88).

If the OK message has been transmitted by the satellite POS terminal 13, the application package that has been stored in the RAM 62 of the master POS terminal 13A is sent to this satellite POS terminal 13 (step S89). A plurality of application packages may be transmitted individually one at a time or in continuous fashion.

When the transmission of all application packages ends, an end message is sent from the master POS terminal 13A to the satellite POS terminal 13. If an OK message is sent back from this satellite POS terminal 13, DLL with regard to this satellite POS terminal 13 ends.

The pointer N is incremented by one (step S90) and the above-described processing is repeated with respect to the satellite POS terminal 13 having the new Terminal No. (step 91). If the value of the pointer N exceeds the number of satellite POS terminals, end processing is executed and all operations end (step S92).

In a case where a satellite POS terminal 13 having the Terminal No. designated by the pointer N is not the subject of DDL, only processing for incrementing the pointer N is carried out (steps S86, S90).

In a case where the master POS terminal 13A is designated to undergo DDL, it goes without saying that the master POS terminal 13A stores the application package sent from the host device 11 in the package area of RAM 62.

In addition to the ID number of a new application package or of one to be added, the host device 11 sends, as necessary, the master POS terminal 13A such data as the ID number of an application package to be deleted as well as the address of the RAM in which the new application package or the application package to be added is stored, and transmits this data also to the satellite POS terminal 13, as illustrated in the first and second embodiments.

Fifth Embodiment

In a terminal device such as an ECR or POS terminal, an application package i is capable of calling another application package j, and a shift in control can be made via an application interface program, as made clear in the third embodiment described above. An application package called a large number of times (i.e., having a high frequency of use) is important or useful in the terminal device. The frequency of use of an application package is influenced by the circumstances in which the terminal device is placed. Accordingly, it is important that the number of times an application package is called be counted. On the basis of statistics relating to the frequency of use of an application package, it is possible to analyze the degree of importance and the degree of utilization of the application package, and it is possible also to take measures such as suspending the development of application packages having a low frequency of need.

On the other hand, the preservation of data regarding the sequence in which application packages are called as well as the times at which they are called is important for countermeasures taken when a trouble arises.

The fifth aspect of the present invention relates to management of the number of times an application package is called and management of the times at which it is called.

In this embodiment, the POS terminal 13 illustrated in Fig. 18 is applied as is. The constitution of the ROM shown in Fig. 19 and of the RAM shown in Fig. 20 also are applied as is.

The RAM 62 is provided with an area which stores the tables shown in Figs. 24 and 25, in addition to the area illustrated in Fig. 20.

Fig. 24 illustrates a memory-management/number-of-executions management table. This table is obtained by adding a number-of-executions management table to the memory management table. Though the memory management table is the same as that depicted in Fig. 15, here the ID numbers of the application packages and the starting addresses of the programs are stored in correlated form for the sake of simplicity. The memory-management/number-of-executions management table stores, in addition to the above-mentioned data, the numbers of times application packages have been called in correlation with the ID numbers of these application packages.

Fig. 25 illustrates an execution-history table. The ID numbers of called application packages are stored in this table in the order in which the packages were called, and the times (hour, minute and second) at which these application package were called are stored in the table in correlation with the ID numbers.

Fig. 26 illustrates a program referred to as a "package supervisor". This package supervisor is provided in respective ones of all application packages and controls the transition from one application package to another application package. If stated in connection with Fig. 16, the package supervisor stipulates the details of processing of step S71.

When an instruction pacall (PID, a, b, c) for making a transition to an application package j is read while processing is being executed in accordance with an application package i, control first shifts to the package supervisor within the application package i.

With reference now to Fig. 26, first of all the memory management table is referred to in order to determine whether there is an application package to be called (to which a transition is to be made) by the instruction pacall (step S100). If there is no application package to be called (NO at step S101), control exits from the package supervisor and returns to the original position of the program within the application package i.

If an application package j to be called is in the memory management table, the number of times it has been called as stored in the number-of-executions management table in correlation with the ID number of this package j is incremented by one (steps S101, S102).

Next, the ID number of the application package j to be called and the current time are recorded in the execution-history table (step S103).

Thereafter, control shifts to the package interface program shown in Fig. 16 (step S104) and processing in the package supervisor is ended.

Sixth Embodiment

Finally, an embodiment of the sixth aspect of the present invention will be described in detail with reference to Figs. 27 through 30.

In the sixth embodiment, the POS terminal system shown in Fig. 1 and the application program creating apparatus shown in Fig. 2, which were used in the description of the first embodiment, are applied as is.

As described in the first embodiment, a plurality of application packages are selectively combined in the application program creating apparatus in conformity with the functions requested of POS terminals, and these application packages are loaded in the pertinent POS terminals. Since the prices of the application packages differ from one another, the price of the combination differs depending upon the combination. Since the volumes of application packages also differ from one another, the memory capacity necessary to store the combination differs depending upon the combination. There are also application packages which require optional equipment. Accordingly, the overall price of a POS terminal also differs depending upon the functions required of the POS terminal.

The sixth embodiment relates to an application program creating apparatus which, in response to input of a list of functions required for a POS terminal, is capable of estimating the total price of the POS terminal equipped with the functions that satisfy these required functions.

Only the different features of this embodiment will be described, and a redundant description of the POS terminal system shown in Fig. 1 and the application program creating apparatus shown in Fig. 2 will be deleted.

A package-data table shown in Fig. 27, a hardware unit-price table shown in Fig. 28, and an optional equipment unit-price table shown in Fig. 29 are set in the RAM 23 of application program creating apparatus 10 in advance.

With reference to Fig. 27, the following are stored as one package record in the package-data table for every package: the ID number and unit price of this application package, the memory capacity necessary for storing this application package, and the number (NO.) of any optional equipment (one or a plurality) necessitated by the application package. The package records are created with regard to all application packages that have been stored in the library 24, and these are set in the package data table.

Examples of optional equipment are a weigher and a CRT display unit, etc. It will be assumed that the display unit with which a POS terminal is equipped as a standard item is a numeric display device. With an application package that controls a weigher and converts weight data obtained from the weigher into an amount of money, the weigher and the CRT display unit are the items of optional equipment. In this case, it is necessary that the CRT display unit be substituted for the numeric display device. It goes without saying that there are also application packages that do not require optional equipment.

The CPU 20 of the application program creating apparatus 10 goes to the package-data table to retrieve the ID number of an application package corresponding to the inputted function, and refers to the record which contains this ID number.

With reference now to Fig. 28, it will be seen that the unit price of standard hardware, the unit prices of various RAMs and the unit prices of various ROMs have been set in the hardware unit-price table.

The unit price of standard hardware is the price of the terminal device per se in which the application package is to be loaded. Excluded are the prices of application packages, a RAM or ROM for storing the application packages and optional equipment. An example would be the price of the POS terminal itself (excluding application packages, a RAM or ROM for storing the application packages and optional equipment) in which a resident program has been stored.

As set forth in the earlier embodiments, POS terminals include those in which application packages are stored in a RAM (this type of POS terminal shall be referred to as a "RAM machine") and those in which application packages are stored in a ROM (this type of POS terminal shall be referred to as a "ROM machine"). In a RAM machine, application pakcages are loaded In the RAM through a transmission line or via a floppy disk. In a ROM machine, the application packages are written in the ROM using a ROM writer or the like.

In the hardware unit-price table, the RAM unit price is the unit price of the RAM used in order to store application packages in the RAM machine. The ROM unit price is the unit price of the ROM used in order to write in the application packages in the ROM machine.

The CPU 20 in the application program creating apparatus 10 refers to the package-data table to calculate the memory capacity needed to store the application packages for achieving all of the functions set forth in the inputted list of required functions, decides the types and number of RAMs or ROMs which will satisfy the calculated capacity in conformity with an input designating the RAM machine or ROM machine, and calculates the total price of the necessary memory by referring to the hardware unit-price table.

With reference to Fig. 29, it will be seen that, with regard to optional equipment necessitated by all of the application packages that have been stored in the library 24, the unit prices of these items of optional equipment have been set in correlation with the equipment numbers.

The CPU 20 of the application program creating apparatus 10 refers to the package-data table to decide the optional equipment required by the application packages for achieving all of the functions set forth in the inputted list of required functions, and calculates the total price of these items of optional equipment by referring to the optional equipment unit-price table.

It goes without saying that the unit prices illustrated in Figs. 27 through 29 are capable of being changed at will.

Fig. 30 is a flowchart illustrating the procedure of estimation processing executed by the CPU 20 in the application program creating apparatus 10.

In a case where unit-price change command has been inputted from the input unit 28, the unit prices in each of the tables shown in Figs. 27 through 29 are rewritten in conformity with the inputted new unit prices of the packages, hardware and optional equipment (steps S110, S111).

When a list of functions required for a certain POS terminal is inputted, the application packages corresponding to these functions are selected and the IDs of these packages are decided (steps S112, S113). Thereafter, the unit prices of all application packages required are read out upon referring to the package-data table, these unit prices are added together and the total sum S of the application packages required are calculated (step S114).

Furthermore, the memory capacities for all of the application packages required are read out by referring to the package data table, these are added together and the memory capacity M required is calculated (step S115).

On the basis of the memory capacity M thus obtained and in accordance with whether the machine is the RAM machine or the ROM machine, the type or types of one or a plurality of RAMs or ROMs having the calculated memory capacity is decided (step S116). The unit price of the type of RAM or ROM decided is then read out of the hardware unit-price table, the necessary number of unit prices are added together, and the total amount A of necessary memories is calculated (step S117).

Furthermore, the Nos. of the items of optional equipment necessitated by the required application packages are read out of the package-data table (step S118). The unit prices corresponding to the Nos. of the necessary optional equipment are read out of the optional equipment unit-price table and these are added together, whereby the total cost B of the optional equipment is calculated (step S119).

The price of the standard hardware is read out of the hardware unit-price table. The total price A of the necessary memory calculated at step S117 and the total price B of the necessary optional equipment calculated at step S119 are added to the price of the standard hardware to obtain the total price H of the hardware (step S120).

The total price S of the application packages, the total price H of the hardware and the required memory capacity M obtained in the foregoing processing are displayed on the display unit 29 (step S121).

Thus, when a list of functions required by a user is inputted, the application packages necessary for implementing these functions are selected and the price of the application program constructed by the combination of these selected application packages, the memory capacity needed to store the application program and the total price of the hardware inclusive of this memory are calculated. The accurate estimated price of one POS terminal can thus be obtained merely by inputting the list of required functions.

It goes without saying that the present invention is not limited to an apparatus for creating the application programs of a POS terminal but can be applied also to apparatus for creating all types of application programs which implement, by a combination of application packages, all of the functions of terminal devices required by users.

Industrial Applicability

For every unit function required by a terminal device, a program for implementing this function is put into package form. Accordingly, even if a required set of functions differs for every terminal device, a program which satisfies the required set of functions can readily be supplied to the corresponding terminal device by combining the program packages corresponding to the set. In a case where there is a change in the required functions, this also can be dealt with easily. The present invention is suited to diversified production of application programs.

**Claims**

1. A program creating system having a program creating apparatus which comprises:
   program file means for storing a plurality of program packages, each of which comprises a program for implementing a unit function;
   function input means for inputting a set of functions which require implementation; and
   means for reading the program packages, which are for implementing the functions inputted by said function input means, out of said program file means and outputting the program packages.

2. A program creating system according to claim 1, wherein said output means is means for transmitting the read program packages.

3. A program creating system according to claim 1, wherein said output means is means for recording the read program packages on a storage medium.

4. A program creating system according to claim 1, wherein said program creating apparatus further comprises:

    means for deciding addresses of storage areas in memory means in a terminal device in which the application packages read out of said program file means are to be loaded;

    means for creating a package-address management table for storing, in correlated form, ID numbers of the program packages and addresses of storage areas in memory means in a terminal device in which these program packages are to be loaded.

5. A program creating system according to claim 4, wherein said output means outputs said package-address management table together with the program packages.

6. A program creating system according to claim 4, wherein said program creating apparatus further comprises means which, when a new set of functions has been inputted by said function input means, refers to said package-address management table for judging whether there is a program package to be added, decides the address of the storage area of said memory means in which the program package to be added is to be loaded if there is such a program package to be added, and updates said package-address management table.

7. A program creating system according to claim 6, wherein said output means reads the program package to be added out of said program file means and outputs it together with said updated package-address management table.

8. A program creating system according to claim 4, wherein said program creating apparatus further comprises means which, when a new function to be added has been inputted by said function input means, decides the address of the storage area of said memory means in which the program package for implementing the new function is to be loaded, and updates said package-address management table.

9. A program creating system according to claim 4, wherein said program creating apparatus further comprises means which, when a new set of functions has been inputted by said function input means, refers to said package-address management table for judging whether there is a program package to be deleted, and, if there is such a program package to be deleted, erases data relating to this program package from said package-address management table.

10. A program creating system according to claim 9, further comprising means which, if there is a program package to be deleted, commands said terminal device to erase this program package from said memory means.

11. A program creating apparatus comprising:

    program file means for storing a plurality of program packages, each of which comprises a program for implementing a unit function, having ID numbers that differ from one another;

    function input means for inputting a set of functions which require implementation;

    means for creating a package-address management table which stores, in correlated form, the ID numbers of the program packages for implementing the functions inputted by said function input means, and addresses of storage areas in memory means in a terminal device in which these program packages are to be loaded; and

    means for reading the program packages, which are for implementing the functions inputted by said function input means, out of said program file means and loading them in said terminal device in accordance with the created package-address management table.

12. A program creating apparatus according to claim 11, wherein said loading means load the created package-address management table in said terminal device.

13. A program creating apparatus according to claim 11, wherein said program creating apparatus further comprises means which, when a new set of functions has been inputted by said function input means, refers to said package-address management table for judging whether there is a program package to be added, decides the address of the storage area of said memory means in which the program package to be added is to be loaded if there is such a program package to be added, and updates said package-address management table.

**14.** A program creating apparatus according to claim 13, wherein said loading means reads the program package to be added out of said program file means and loads it in said terminal device together with said updated package-address management table.

**15.** A program creating apparatus according to claim 11, further comprising means which, when a new function to be added has been inputted by said function input means, decides the address of the storage area of said memory means in which the program package for implementing the new function is to be loaded, and updates said package-address management table.

**16.** A program creating apparatus according to claim 11, further comprising means which, when a new set of functions has been inputted by said function input means, refers to said package-address management table for judging whether there is a program package to be deleted, and, if there is such a program package to be deleted, erases data relating to this program package from said package-address management table.

**17.** A program creating system according to claim 16, further comprising means which, if there is a program package to be deleted, commands said terminal device to erase this program package from said memory means.

**18.** A program creating apparatus according to claim 11, further comprising means which, when data representing a program package to be deleted has been inputted by said function input means, erases data relating to this program package from said package-address management table and commands said terminal device to erase this program package from said memory means.

**19.** A program creating apparatus according to claim 11, wherein said loading means is means for transmitting the program package read out of said program file means.

**20.** A program creating apparatus according to claim 11, wherein said loading means is means for recording the program package read out of the program file means on a recording medium.

**21.** A program creating system according to claim 1, wherein said program creating apparatus further comprises means for creating a package management table which stores, in correlation with ID numbers of terminal devices in which program packages read out of said program file means are to be stored, ID numbers of the program packages to be loaded in these terminal devices.

**22.** A program creating system according to claim 21, wherein said program creating apparatus further comprises means which, when a new set of functions has been inputted by said function input means, refers to said package management table for judging whether there is a program package to be added, and, if there is a program package to be added, reads this program package to be added out of said program file means, outputs this program package and updates said package management table.

**23.** A program creating system according to claim 21, wherein said program creating apparatus further comprises means which, when a new function to be added has been inputted by said function input means, reads the program package for implementing this new function out of said program file means, outputs this program package and updates said package management table.

**24.** A program creating system according to claim 21, wherein said program creating apparatus further comprises means which, when a new set of functions has been inputted by said function input means, refers to said package management table for judging whether there is a program package to be deleted, and, if there is a program package to be deleted, erases the ID number of this program package from said package management table.

**25.** A program creating system according to claim 24, wherein said program creating apparatus further comprises means which, if there is a program package to be deleted, commands said terminal device to erase this program package.

**26.** A program creating system according to claim 21, wherein said program creating apparatus further comprises means which, when data representing a program package to be deleted has been inputted by said function input means, erases the ID number of this program package from said package management table and commands said terminal device to erase this program package.

**27.** A program creating system according to claim 21, wherein said terminal device comprises:

memory means for storing program packages to be loaded; and

a package-address management table for storing, in correspondence with the ID numbers of the loaded program packages, addresses of storage areas of said memory means in which the program packages will be loaded.

**28.** A program creating system according to claim 27, wherein said terminal device further comprises means which, when a program package to be loaded has been provided, refers to said package-address management table for deciding the address of the storage area in which this program package is to be stored, stores the provided program package in this storage area and updates the package-address management table.

**29.** A program creating system according to claim 27, wherein said terminal device further comprises means which, when a program package to be loaded has been provided, refers to said package-address management table for judging whether there is a storage area adequate for storing this program package, and, when there is no adequate storage area, outputs a signal to this effect.

**30.** A program creating system according to claim 27, wherein said terminal device further comprises means which, when a command indicating that a program package to be erased has been received, refers to said package-address management table to erase the pertinent program package from said memory means and update said package-address management table.

**31.** A program creating system according to claim 1, wherein a program package includes an instruction for calling, in processing in accordance with this program, a package interface program in order to call another program package, this instruction including an ID number of the program package to be called.

**32.** A program creating system according to claim 31, wherein said instruction further includes data used in processing in accordance with the program package to be called.

**33.** A program creating system according to claim 31, wherein a program package is described using relative addresses that are valid within the program package.

**34.** A program creating system according to claim 31, wherein a terminal device having memory means for storing a plurality of program packages outputted by said program creating apparatus comprises:

a memory management table for storing starting addresses of storage areas, in which respective program packages in the memory means have been stored, in correlation with ID numbers of the corresponding program packages; and

package-interface program means which, when called by said call instruction of a program package, reads the starting address corresponding to the ID number of the program package included in this instruction out of said memory management table and performs control so that a jump is effected to this starting address.

**35.** A program creating system according to claim 31, wherein a program package is described using relative addresses that are valid within the program package, and, in execution of processing in accordance with each program package, the starting address of the storage area in which this program package is stored in said memory means is used as a base, and an absolute address in said memory means is calculated by adding a relative address to said starting address.

**36.** A program creating system according to claim 1, wherein a plurality of terminal devices are connected hierarchically to said program creating apparatus via a transmission line;

the plurality of terminal devices are composed of at least one terminal device of a superior hierarchical level and a plurality of terminal devices of inferior hierarchical levels;

said program creating apparatus has first means for reading a prescribed program package out of said program file means and down-line loading it to the terminal device of the superior hierarchical level;

the terminal device of the superior hierarchical level has second means for down-line loading the program package, which has been transmitted from said program creating apparatus, to the terminal devices of the inferior hierarchical level; and

each terminal device of the inferior hierarchical level has memory means for storing the program package transmitted from the terminal device of the superior hierarchical level.

**37.** A program creating system according to claim 36, wherein said first means in said program creating apparatus designates, to the terminal device of the superior hierarchical level, the terminal device of the inferior hierarchical level to which down-line loading is to be performed.

**38.** A program creating system according to claim 37, wherein said second means in the terminal device of the superior hierarchical level down-line loads the program package from the host device to the designated terminal device of the inferior hierarchical level.

**39.** A program creating system according to claim 36, wherein the terminal device of the superior hierarchical level has memory means for storing a program package transmitted from said program creating apparatus.

**40.** A program creating system according to claim 1, wherein each program package includes a package-supervisor program used, in processing in accordance with the program of this package, when another program package is called; and

a terminal device having memory means for storing a plurality of program packages outputted by said program creating means has means for recording, in accordance with said package-supervisor program, at least one of the number of times a called program package is called and a history of execution of the called program package.

**41.** A program creating system according to claim 40, wherein said history of execution includes data relating to the order in which program packages were called and the times at which they were called.

**42.** A program creating system according to claim 34, wherein each program package includes a package-supervisor program used, in processing in accordance with the program of this package, when another program package is called; and

said terminal device has means for recording, in accordance with said package-supervisor program, at least one of the number of times a called program package is called and a history of execution of the called program package, and subsequently effects a transition to processing in accordance with said package interface program.

**43.** A program creating system according to claim 1, wherein said program creating apparatus comprises:

a package data table for storing beforehand, in correlation with respective ID numbers representing the plurality of program packages, unit prices of the program packages and memory capacities needed to store the program packages;

a memory unit-price table for storing beforehand a unit price for each type of memory;

first means which refers to said package data table for calculating the total price of the program packages for implementing the functions inputted by said function input means;

second means for calculating the memory capacity needed to store the program packages for implementing the functions inputted by said function input means;

third means which refers to said memory unit-price table for calculating the total price of the memory for realizing the memory capacity calculated by said second means; and

means for outputting the total price of the program packages, the memory capacity and the total price of the memory that have been calculated.

**44.** A program creating system according to claim 43, wherein said output means is a display device.

**45.** A program creating system according to claim 1, wherein said program creating apparatus comprises:

a package data table for storing beforehand, in correlation with respective ID numbers representing the plurality of program packages, unit prices of the program packages, memory capacities needed to store the program packages and types of optional equipment necessary for executing these program packages;

a hardware unit-price table for storing beforehand a unit price of each type of memory and a standard hardware price;

an optional equipment unit-price table for storing beforehand a unit price of each type of optional equipment;

first means which refers to said package data table for calculating the total price of the program packages for implementing the functions inputted by said function input means;

second means for calculating the memory capacity needed to store the program packages for implementing the functions inputted by said function input means;

third means which refers to said hardware unit-price table for calculating the total price of the memory for realizing the memory capacity calculated by said second means;

fourth means which refers to said optional equipment unit-price table for calculating the total price of optional equipment required by program packages for implementing the functions inputted by said function input means;

fifth means for calculating the total price of hardware by adding the standard hardware price that has been stored in said hardware unit-price table, the calculated total price of the memory and the calculated total price of the optional equipment; and

means for outputting the total price of the program packages, the memory capacity and the total price of the hardware that have been calculated.

46. A program creating system according to claim 45, wherein said output means is a display device.

47. A program creating method comprising:

storing beforehand, in a program file, a plurality of program packages, each of which comprises a program for implementing a unit function, having ID numbers that differ from one another;

creating a package-address management table when a set of functions requiring implementation has been inputted, wherein the package-address management table stores, in correlated form, the ID numbers of the program packages for implementing the inputted functions and addresses of storage areas in a memory in a terminal device in which these program packages are to be loaded; and

reading the program packages, which are for implementing the inputted functions, out of the program file and loading them in the terminal device in accordance with the created package-address management table.

48. A program creating method according to claim 47, further comprising loading the created package-address management table in said terminal device.

49. A program creating method according to claim 47, further comprising referring to the package-address management table to judge whether there is a program package to be added when a new set of functions has been inputted; and

deciding the address of the storage area of the memory in which the program package to be added is to be loaded if there is such a program package to be added, and updating said package-address management table.

50. A program creating method according to claim 49, further comprising reading the program package to be added out of said program file and loading it in said terminal device together with said updated package-address management table.

51. A program creating method according to claim 47, further comprising deciding the address of the storage area of said memory in which the program package for implementing the new function is to be loaded when a new function to be added has been inputted, and updating said package-address management table.

52. A program creating method according to claim 47, further comprising referring to said package-address management table to judge whether there is a program package to be deleted when a new set of functions has been inputted; and

if there is such a program package to be deleted, erasing data relating to this program package from said package-address management table.

53. A program creating method according to claim 52, further comprising commanding said terminal device to erase a program package from said memory if there is such a program package to be deleted.

54. A program creating method according to claim 47, further comprising erasing data relating to a program package from said package-address management table and commanding said terminal device to erase this program package from said memory when data representing this program package to be deleted has been inputted.

55. A program creating method according to claim 47, further comprising loading a program package read out of said program file by transmitting this program package to said terminal device.

56. A program creating method according to claim 47, further comprising loading a program package read out of said program file by recording this program package on a recording medium.

57. A program creating method according to claim 47, wherein a program package includes an instruction for calling, in processing in accordance with this program, a package interface program in order to call another program package, this instruction including an ID number of the program package to be called.

**58.** A program creating method according to claim 47, wherein said instruction further includes data used in processing in accordance with the program package to be called.

**59.** A program creating method according to claim 47, wherein a program package is described using relative addresses that are valid within the program package.

**60.** A program creating apparatus comprising:

program file means for storing a plurality of program packages, each of which comprises a program for implementing a unit function;

function input means for inputting a set of functions which require implementation;

means for creating a package management table which stores the ID numbers of the program packages for implementing the functions inputted by said function input means, in correlation with ID numbers of terminal devices in which these program packages are to be loaded; and

means for reading the program packages, which are for implementing the functions inputted by said function input means, out of the program file means and loading them in said terminal devices in accordance with the created package management table.

**61.** The program creating apparatus according to claim 60, further comprising means which, when a new set of functions has been inputted by said function input means, refers to said package management table for judging whether there is a program package to be added, reads the program package to be added out of said program file means and loads it in a terminal device if there is such a program package to be added, and updates said package management table.

**62.** The program creating apparatus according to claim 60, further comprising means which, when a new function to be added has been inputted by said function input means, reads the program package for implementing this new function out of said program file means, loads it in the terminal device and updates said package management table.

**63.** The program creating apparatus according to claim 60, further comprising means which, when a new set of functions has been inputted by said function input means, refers to said package management table for judging whether there is a program package to be deleted, and, if there is such a program package to be deleted, erases the ID number of this program package from said package management table.

**64.** The program creating apparatus according to claim 63, further comprising means which, if there is a program package to be deleted, commands said terminal device to erase this program package.

**65.** The program creating apparatus according to claim 60, further comprising means which, when data representing a program package to be deleted has been inputted by said function input means, commands said terminal device to erase the ID number of this program package from said package management table and erase this program package from said memory means.

**66.** A program creating system comprising a program creating apparatus and terminal devices connected thereto by a transmission line;

said program creating apparatus comprising:

program file means for storing a plurality of program packages, each of which comprises a program for implementing a unit function, having ID numbers that differ from one another;

function input means for inputting a set of functions which require implementation;

means for creating a package-address management table which stores the ID numbers of the program packages for implementing the functions inputted by said function input means, in correlation with ID numbers of terminal devices in which these program packages are to be loaded; and

means for reading the program packages, which are for implementing the functions inputted by said function input means, out of said program file means and loading them in said terminal devices in accordance with the created package-address management table; and

said terminal devices each comprising:

memory means for storing the program packages transmitted from said program creating apparatus; and

a package-address management table for storing, in correspondence with the ID numbers of the program packages stored in said memory means, addresses of storage areas of the memory means in which the program packages will be stored.

**67.** A program creating system according to claim 66, wherein said program creating apparatus further comprises means which, when a new set of functions has been inputted by said function input means, refers to said package management table for judging whether there is a program package to be added, reads the program package to be added out of said program file means and loads it in said terminal devices if there is such a program package to be added, and updates said package management table.

68. A program creating system according to claim 66, wherein said program creating apparatus further comprises means which, when a new function to be added has been inputted by said function input means, reads the program package for implementing this new function out of said program file means, loads it in said terminal devices and updates said package management table.

69. A program creating system according to claim 66, wherein said program creating apparatus further comprises means which, when a new set of functions has been inputted by said function input means, refers to said package management table for judging whether there is a program package to be deleted, and, if there is such a program package to be deleted, erases the ID number of this program package from said package management table.

70. A program creating system according to claim 66, wherein said program creating apparatus further comprises means which, if there is a program package to be deleted, commands said terminal device to erase this program package.

71. A program creating system according to claim 66, wherein said program creating apparatus further comprises means which, when data representing a program package to be deleted has been inputted by said function input means, commands said terminal device to erase the ID number of this program package from said package management table and erase this program package from said memory means.

72. A program creating system according to claim 66, wherein said terminal device comprises means which, when a program package has been received from said program creating apparatus, refers to said package-address management table for deciding the address of the storage area in which this program package is to be stored, stores the provided program package in this storage area and updates said package-address management table.

73. A program creating system according to claim 66, wherein said terminal device comprises means which, when a program package has been received from said program creating apparatus, refers to said package-address management table for judging whether there is a storage area adequate for storing this program package, and, when there is no adequate storage area, outputs a signal to this effect.

74. A program creating system according to claim 66, wherein said terminal device further comprises means which, when a command indicating that a program package to be erased has been received, refers to said package-address management table to erase the pertinent program package from said memory means and update said package-address management table.

75. A program creating system according to claim 66, wherein a plurality of said terminal devices are connected hierarchically to said program creating apparatus via a transmission line;

said plurality of terminal devices are composed of at least one terminal device of a superior hierarchical level and a plurality of terminal devices of inferior hierarchical levels;

said program creating apparatus has first means for reading a prescribed program package out of said program file means and down-line loading it to the terminal device of the superior hierarchical level;

the terminal device of the superior hierarchical level has second means for down-line loading the program package, which has been transmitted from said program creating apparatus, to the terminal devices of the inferior hierarchical level; and

each terminal device of the inferior hierarchical level has memory means for storing the program package transmitted from the terminal device of the superior hierarchical level.

76. A program creating system according to claim 75, wherein said first means in said program creating apparatus designates, to the terminal device of the superior hierarchical level, the terminal device of the inferior hierarchical level to which down-line loading is to be performed.

77. A program creating system according to claim 76, wherein said second means in the terminal device of the superior hierarchical level down-line loads the program package from the host device to the designated terminal device of the inferior hierarchical level.

**78.** A program creating system according to claim 75, wherein the terminal device of the superior hierarchical level has memory means for storing a program package transmitted from said program creating apparatus.

**79.** A terminal device comprising:

memory means for storing program packages to be loaded; and

a package-address management table for storing, in correspondence with ID numbers of the program packages to be loaded, addresses of storage areas of said memory means in which the program packages will be loaded.

**80.** A terminal device according to claim 79, further comprising means which, when a program package to be loaded has been provided, refers to said package-address management table for judging whether there is a storage area adequate for storing this program package, and, when there is no adequate storage area, outputs a signal to this effect.

**81.** A terminal device according to claim 79, further comprising means which, when a command indicating that a program package to be erased has been received, refers to said package-address management table to erase the pertinent program package from said memory means and update said package-address management table.

**82.** A program creating method comprising:

storing beforehand, in a program file, a plurality of program packages, each of which comprises a program for implementing a unit function, having ID numbers that differ from one another;

creating a package management table when a set of functions requiring implementation has been inputted, wherein the package management table stores, in correlated form, the ID numbers of the program packages for implementing the inputted functions and ID numbers of terminal devices in which these program packages are to be loaded; and

reading the program packages, which are for implementing the inputted functions, out of the program file and loading them in a terminal device in accordance with the created package management table.

**83.** A program creating method according to claim 82, further comprising referring to the package management table to judge whether there is a program package to be added when a new set of functions has been inputted; and

if there is a program package to be added, reading this program package to be added out of said program file, loading it in said terminal device and updating said package management table.

**84.** A program creating method according to claim 82, further comprising reading a program package for implementing anew function out of said program file and loading it in said terminal device when such a new function to be added has been inputted, and updating said package management table.

**85.** A program creating method according to claim 82, further comprising referring to said package management table to judge whether there is a program package to be deleted when a new set of functions has been inputted; and,

if there is a program package to be deleted, erasing the ID number of this program package from said package management table.

**86.** A program creating method according to claim 85, further comprising commanding said terminal device to erase a program package if there is such a program package to be deleted.

**87.** A program creating method according to claim 82, further comprising commanding said terminal device to erase the ID number of a program package from said package management table and erase this program package when data representing a program package to be deleted has been inputted.

**88.** A method of loading a program in a terminal device comprising:

creating a package-address management table for storing, in correspondence with ID numbers of program packages, addresses of storage areas of a memory in which the program packages will be loaded;

when a program package to be loaded has been provided, referring to said package-address management table for deciding the address of the storage area in which this program package is to be stored;

storing the provided program package in this storage area; and

updating said package-address management table.

**89.** A method of loading a program in a terminal device according to claim 88, further comprising referring to said package-address management table for judging whether there is a storage area adequate for storing a program package when this program package to be loaded has been provided, and, when there is no adequate storage area, outputting a signal to this effect.

90. A method of loading a program in a terminal device according to claim 88, further comprising referring to said package-address management table to erase a pertinent program package from the memory and updating said package-address management table when a command indicating that this program package should be erased has been received.

91. A method of loading a program in a terminal device according to claim 88, wherein a program package includes an instruction for calling, in processing in accordance with this program, a package interface program in order to call another program package, this instruction including an ID number of the program package to be called.

92. A method of loading a program in a terminal device according to claim 91, wherein said instruction further includes data used in processing in accordance with the program package to be called.

93. A method of loading a program in a terminal device according to claim 88, wherein a program package is described using relative addresses that are valid within the program package.

94. A terminal device comprising:
memory means for storing a plurality of program packages, each of which comprises a program for implementing a unit function, having ID numbers that differ from one another;
said program package including an instruction for calling, during execution of processing in accordance with this program, a package interface program in order to call another program package, this instruction including an ID number of the program package to be called;
a memory management table for storing starting addresses of storage areas, in which respective program packages in the memory means have been stored, in correlation with ID numbers of the corresponding program packages; and
package-interface program means which, when called by said call instruction of a program package, reads the starting address corresponding to the ID number of the program package included in this instruction out of said memory management table and performs control so that a jump is effected to this starting address.

95. A terminal device according to claim 94, wherein said instruction further includes data used in processing in accordance with the program package to be called.

96. A terminal device according to claim 94, wherein a program package is described using relative addresses that are valid within the program package.

97. A terminal device according to claim 94, wherein a program package is described using relative addresses that are valid within the program package, and, in execution of processing in accordance with each program package, the starting address of the storage area in which this program package is stored in said memory means is used as a base, and an absolute address in said memory means is calculated by adding a relative address to said starting address.

98. A terminal device according to claim 94, wherein each program package includes a package-supervisor program means used, in processing in accordance with the program of this package, when another program package is called;
the package-supervisor program means recording at least one of the number of times a called program package is called and a history of execution of the called program package.

99. A terminal device according to claim 98, wherein said history of execution includes data relating to the order in which program packages were called and the times at which they were called.

100. A terminal device according to claim 94, wherein each program package includes package-supervisor program means used, in processing in accordance with the program of this package, when another program package is called;
the package-supervisor program means recording at least one of the number of times a called program package is called and a history of execution of the called program package, and subsequently effects a transition to processing in accordance with said package interface program.

101. A method of linking a program package comprising:

storing beforehand, in a memory, a plurality of program packages, each of which comprises a program for implementing a unit function, having ID numbers that differ from one another;

constructing said program package in such a manner that each includes an instruction for calling, during execution of processing in accordance with this program, a package interface program in order to call another program package, this instruction including an ID number of the program package to be called;

creating a memory management table for storing starting addresses of storage areas, in which respective program packages in the memory have been stored, in correlation with the ID numbers of the corresponding program packages; and

when said package interface program is called by said call instruction of a program package, reading the starting address corresponding to the ID number of the program package included in this instruction out of said memory management table and performing control so that a jump is effected to this starting address.

102. A method of linking a program package according to claim 101, wherein said instruction further includes data used in processing in accordance with the program package to be called.

103. A method of linking a program package according to claim 101, further comprising describing a program package using relative addresses that are valid within the program package.

104. A method of linking a program package according to claim 101, wherein a program package is described using relative addresses that are valid within the program package, and, in execution of processing in accordance with each program package, the starting address of the storage area in which this program package is stored in said memory is used as a base, and an absolute address in said memory is calculated by adding a relative address to said starting address.

105. A method of linking a program package according to claim 101, further comprising:

constructing each program package so as to include a package-supervisor program used, in processing in accordance with the program of this package, when another program package is called; and

when another program package is called by this package-supervisor program, recording at least one of the number of times a called program package is called and a history of execution of the called program package.

106. A method of linking a program package according to claim 105, wherein said history of execution includes data relating to the order in which program packages were called and the times at which they were called.

107. A method of linking a program package according to claim 101, further comprising:

constructing each program package so as to include a package-supervisor program used, in processing in accordance with the program of this package, when another program package is called; and

when another program package is called by this package-supervisor program, recording at least one of the number of times a called program package is called and a history of execution of the called program package, and subsequently effecting a transition to said package interface program.

108. A data processing system composed of a host device and plurality of network terminal devices connected hierarchically to the host device via a transmission line;

the plurality of network terminal devices being composed of at least one network terminal device of a superior hierarchical level and a plurality of network terminal devices of inferior hierarchical levels;

said host device having program file means for storing a plurality of program packages, each of which comprises a program for implementing a unit function, and first means for reading a prescribed program package out of said program file means and down-line loading it to the network terminal device of the superior hierarchical level;

the network terminal device of the superior hierarchical level having second means for down-line loading the program package, which has been transmitted from said host device, to the network terminal devices of the inferior hierarchical level; and

each terminal device of the inferior hierarchical level having memory means for storing the program package transmitted from the network terminal device of the superior hierarchical level.

109. A data processing system according to claim 108, wherein said first means in said host device designates, to the network terminal device of the superior hierarchical level, the network terminal device of the inferior hierarchical level to which down-line loading is to be performed.

110. A data processing system according to claim 109, wherein said second means of the network terminal device of the superior hierarchical level down-line loads the program package from said host device to the designated network terminal device of the inferior hierarchical level.

111. A data processing system according to claim 108, wherein the network terminal device of the superior hierarchical level has memory means for storing a program package transmitted from said host device.

112. A method of downloading a program comprising:

connecting hierarchically a plurality of network terminal devices to a host device via a transmission line;

dividing the plurality of network terminal devices into at least one network terminal device of a superior hierarchical level and a plurality of network terminal devices of inferior hierarchical levels;

storing beforehand a plurality of program packages, each of which comprises a program for implementing a unit function, in a program file of said host device;

reading a prescribed program package out of said program file and down-line loading it to the network terminal device of the superior hierarchical level by said host device;

down-line loading the program package, which has been transmitted from said host device, to the network terminal devices of inferior hierarchical levels by said network terminal device of the superior hierarchical level; and

storing the program package, which has been transmitted from the network terminal device of the superior hierarchical level, to a memory of the network terminal devices of inferior hierarchical levels.

113. A method of down-line loading a program according to claim 112, wherein the network terminal device of the inferior hierarchical level to which down-line loading is to be performed is designated to the network terminal device of the superior hierarchical level by said host device.

114. A method of down-line loading a program according to claim 113, wherein the network terminal device of the superior hierarchical level down-line loads the program package from said host device to the designated network terminal device of the inferior hierarchical level.

115. A method of down-line loading a program according to claim 112, wherein a program package transmitted from said host device is stored in a memory of the network terminal device of the superior hierarchical level.

116. A terminal device comprising:

memory means for storing a plurality of program packages, each of which comprises a program for implementing a unit function, having ID numbers that differ from one another;

package-supervisor program means, which is included in each program package, used in processing in accordance with the program of this package when another program package is called; and

means for recording, in accordance with said package-supervisor program means, at least one of the number of times a called program package is called and a history of execution of the called program package.

117. A terminal device according to claim 116, wherein said history of execution includes data relating to the order in which program packages were called and the times at which they were called.

118. A terminal device according to claim 116, wherein said memory means further comprises package-interface program means for calling another program package; and

a transition is effected to processing in accordance with said package-interface program means after said package-supervisor program means records of at least one of the number of times a program package is called and a history of execution of the called program package.

119. A terminal device according to claim 118, further provided with a memory management table for storing starting addresses of storage areas, in which respective program packages in said memory means have been stored, in correlation with ID numbers of the corresponding program packages;

a starting address corresponding to an ID number, which is indicative of a program package to be called, included in a call instruction of a program package being read out of said memory management table by said package-interface program means, and control being performed so that a jump is effected to this starting address.

120. A terminal device according to claim 116, wherein a program package is described using relative addresses that are valid within the program package, and, in execution of processing in accordance with each program package, the starting address of the storage area in which this program package is stored in said memory is used as a base, and an absolute address in said memory means is calculated by adding a relative address to said starting address.

121. A program management method comprising:

storing beforehand, in memory, a plurality of program packages, each of which comprises a program for implementing a unit function, having ID numbers that differ from one another;

constructing each program package so as to include a package-supervisor program used, in processing in accordance with the program of this package, when another program package is called; and

recording, in accordance with the package-supervisor program, at least one of the number of times a called program package is called and a history of execution of the called program package.

122. A program management method according to claim 121, wherein said history of execution includes data relating to the order in which program packages were called and the times at which they were called.

123. A program management method according to claim 121, further comprising:

storing, in said memory, a package interface program for calling another program; and

effecting a transition to processing in accordance with said package interface program after said package supervisor program records of at least one of the number of times a program package is called and a history of execution of the called program package.

124. A program management method according to claim 123, further provided with a memory management table for storing starting addresses of storage areas, in which respective program packages in said memory have been stored, in correlation with ID numbers of the corresponding program packages;

a starting address corresponding to an ID number, which is indicative of a program package to be called, included in a call instruction of a program package being read out of said memory management table by said package interface program, and control being performed so that a jump is effected to this starting address.

125. A program management method according to claim 121, wherein a program package is described using relative addresses that are valid within the program package, and, in execution of processing in accordance with each program package, the starting address of the storage area in which this program package is stored in said memory is used as a base, and an absolute address in said memory is calculated by adding a relative address to said starting address.

126. A program creating apparatus comprising:

program file means for storing a plurality of program packages, each of which comprises a program for implementing a unit function;

function input means for inputting a set of functions which require implementation;

a package data table for storing beforehand, in correlation with respective ID numbers representing the plurality of program packages, unit prices of the program packages and memory capacities needed to store the program packages;

a memory unit-price table for storing beforehand a unit price for each type of memory;

first means which refers to said package data table for calculating the total price of the program packages for implementing the functions inputted by said function input means;

second means for calculating the memory capacity needed to store the program packages for implementing the functions inputted by said function input means;

third means which refers to said memory unit-price table for calculating the total price of the memory for realizing the memory capacity calculated by said second means; and

means for outputting the total price of the program packages, the memory capacity and the total price of the memory that have been calculated.

127. A program creating apparatus according to claim 126, wherein said output means is a display device.

**128.** A program creating apparatus comprising:

program file means for storing a plurality of program packages, each of which comprises a program for implementing a unit function;

function input means for inputting a set of functions which require implementation;

a package data table for storing beforehand, in correlation with respective ID numbers representing the plurality of program packages, unit prices of the program packages, memory capacities needed to store the program packages and types of optional equipment necessary for executing these program packages;

a hardware unit-price table for storing beforehand a unit price of each type of memory and a standard hardware price;

an optional equipment unit-price table for storing beforehand a unit price of each type of optional equipment;

first means which refers to said package data table for calculating the total price of the program packages for implementing the functions inputted by said function input means;

second means for calculating the memory capacity needed to store the program packages for implementing the functions inputted by said function input means;

third means which refers to said hardware unit-price table for calculating the total price of the memory for realizing the memory capacity calculated by said second means;

fourth means which refers to said optional equipment unit-price table for calculating the total price of optional equipment required by program packages for implementing the functions inputted by said function input means;

fifth means for calculating the total price of hardware by adding the standard hardware price that has been stored in said hardware unit-price table, the calculated total price of the memory and the calculated total price of the optional equipment; and

means for outputting the total price of the program packages, the memory capacity and the total price of the hardware that have been calculated.

**129.** A program creating apparatus according to claim 128, wherein said output means is a display device.

**130.** A program creating method comprising:

storing beforehand, in a program file, a plurality of program packages, each of which comprises a program for implementing a unit function;

creating a package data table for storing beforehand, in correlation with respective ID numbers representing the plurality of program packages, unit prices of the program packages and memory capacities needed to store the program packages;

creating a memory unit-price table for storing beforehand a unit price for each type of memory;

calculating, by referring to said package data table, a total price of program packages for implementing an inputted set of functions;

calculating memory capacity needed to store the program packages for implementing the inputted set of functions;

calculating, by referring to said memory unit-price table, the total price of the memory for realizing the calculated memory capacity; and

outputting the total price of the program packages, the memory capacity and the total price of the memory that have been calculated.

**131.** A program creating method comprising:

storing beforehand, in a program file, a plurality of program packages, each of which comprises a program for implementing a unit function;

creating a package data table for storing beforehand, in correlation with respective ID numbers representing the plurality of program packages, unit prices of the program packages, memory capacities needed to store the program packages and types of optional equipment necessary for executing these program packages;

creating a hardware unit-price table for storing beforehand a unit price for each type of memory and a standard hardware price;

creating an optional equipment unit-price table for storing beforehand a unit price for each type of optional equipment;

calculating, by referring to said package data table, a total price of program packages for implementing the inputted set of functions;

calculating memory capacity needed to store the program packages for implementing the inputted set of functions;

calculating, by referring to said hardware unit-price table, the total price of the memory for realizing the calculated memory capacity;

calculating, by referring to said optional equipment unit-price table, the total price of optional equipment required by the program packages for implementing the inputted set of functions;

calculating the total price of hardware by adding the standard hardware price that has been stored in said hardware unit-price table, the calculated total price of the memory and the calculated total price of the optional equipment; and

outputting the total price of the program packages, the memory capacity and the total price of the hardware that have been calculated.

Fig. 1

Fig.2

CPU —20

25— COMMUNICATION
CONTROL UNIT

ROM —22

27— FDD

RAM —23

28— INPUT UNIT

—24

29— DISPLAY UNIT

# Fig.3

| | |
|---|---|
| CUSTOMER NAME | |
| POS TERMINAL ID | |
| RAM AREA STARTING ADDRESS | MEMORY-SPACE MANAGEMENT TABLE |
| RAM AREA END ADDRESS | |
| APPLICATION PACKAGE ID | |
| STARTING ADDRESS | |
| END ADDRESS | |
| ⋮ | PACKAGE-ADDRESS MANAGEMENT TABLE |
| APPLICATION PACKAGE ID | |
| STARTING ADDRESS | |
| END ADDRESS | |
| POS TERMINAL ID | |
| RAM AREA STARTING ADDRESS | |
| RAM AREA END ADDRESS | |
| APPLICATION PACKAGE ID | |
| STARTING ADDRESS | |
| END ADDRESS | |
| ⋮ | |

# Fig.4

```
        ┌─────────┐
        │  START  │
        └─────────┘
             │
    ┌────────▼──────────┐
    │ INPUT FUNCTION LIST│── S1
    └────────┬───────────┘
             │
          ╱─────╲
   NG    ╱ CHECK  ╲  S2
 ◄──────◄APPROPRIATENESS►
          ╲       ╱
           ╲─────╱
             │ OK
    ┌────────▼──────────┐
    │     EXTRACT        │
    │ REQUIRED PACKAGE   │── S3
    │  FROM LIBRARY      │
    └────────┬───────────┘
    ┌────────▼──────────┐
    │  CREATE MEMORY     │── S4
    │ MANAGEMENT TABLE   │
    └────────┬───────────┘
    ┌────────▼──────────┐
    │  LOAD PACKAGES IN  │
    │  ACCORDANCE WITH   │── S5
    │ MEMORY MANAGEMENT  │
    │     TABLE          │
    └────────┬───────────┘
    ┌────────▼──────────┐
    │   LOAD MEMORY      │── S6
    │ MANAGEMENT TABLE   │
    └────────┬───────────┘
        ┌────▼────┐
        │   END   │
        └─────────┘
```

# Fig.5

START

S10 — RECEIVE MEMORY MANAGEMENT TABLE

(B)

S11 — INPUT LIST OF NEWLY REQUIRED FUNCTIONS

S12 — CHECK APPROPRIATENESS
— NG
— OK

S13 — EXTRACT PACKAGE TO BE DELETED

S14 — TRANSMIT DELETION COMMAND FOR THIS PACKAGE

S15 — UPDATE MEMORY MANAGEMENT TABLE

(A)

S16 — EXTRACT PACKAGE TO BE ADDED

S17 — CHECK WHETHER ALREADY PRESENT

S18 — PRESENT?
— Y
— N

S19 — DISPLAY THAT PACKAGE IS PRESENT

S20 — RETRIEVE BLANK AREA

(C)

S21 — IS THERE BLANK AREA?
— N
— Y

S22 — DISPLAY MEMORY INADEQUACY

(B)

S23 — DECIDE ADDRESS OF LOADING DESTINATION OF ADDITIONAL PACKAGE

S24 — TRANSMIT (LOAD) ADDITIONAL PACKAGE

S25 — UPDATE MEMORY MANAGEMENT TABLE

(C)

S26 — END OF ADDITION?
— N — (A)
— Y

S27 — TRANSMIT (LOAD) MEMORY MANAGEMENT TABLE

END

Fig.6

# Fig.7

| |
|---|
| CUSTOMER NAME |
| POS TERMINAL ID |
| APPLICATION PACKAGE ID |
| APPLICATION PACKAGE ID |
| APPLICATION PACKAGE ID |
| ⋮ |
| APPLICATION PACKAGE ID |
| POS TERMINAL ID |
| APPLICATION PACKAGE ID |
| APPLICATION PACKAGE ID |
| ⋮ |
| CUSTOMER NAME |
| POS TERMINAL ID |
| APPLICATION PACKAGE ID |
| APPLICATION PACKAGE ID |
| PACKAGE MANAGEMENT TABLE |

45

# Fig.8

| APPLICATION PACKAGE ID | |
|---|---|
| STARTING ADDRESS | PACKAGE-ADDRESS MANAGEMENT TABLE |
| END ADDRESS | |
| APPLICATION PACKAGE ID | |
| STARTING ADDRESS | |
| END ADDRESS | |
| | |
| BLANK AREA STARTING ADDRESS | BLANK-AREA MANAGEMENT TABLE |
| BLANK AREA END ADDRESS | |

# Fig.9

```
                    ┌──────────────┐
                    │    START     │
                    └──────┬───────┘
                           │
   ┌───────────────────────┼──────────────────────────────────────────┐
   │                       │                                           │
   │            ┌──────────────────────┐                               │
   │            │   INPUT LIST OF      │─ S30                          │
   │            │   NEWLY REQUIRED     │                               │
   │            │   FUNCTIONS          │                               │
   │            └──────────┬───────────┘                               │
   │                       │            S31                            │
   │       NG       ◇ CHECK ◇                                          │
   │ ◄──────── APPROPRIATENESS                                         │
   │                   ◇                                               │
   │                   │ OK            ┌──────────────────────┐        │
   │            ┌──────────────┐       │   TRANSMIT (LOAD)    │─ S36   │
   │            │ DECIDE PACKAGE│─ S32 │   ADDITIONAL         │        │
   │            │ TO BE DELETED │      │   PACKAGE            │        │
   │            └──────┬───────┘       └──────────┬───────────┘        │
   │            ┌──────────────┐       ┌──────────────────────┐        │
   │            │ DECIDE PACKAGE│      │   CHECK FOR          │        │
   │            │ TO BE ADDED   │─ S33 │   RESPONSE FOR       │─ S37   │
   │            └──────┬───────┘       │   PERTINENT          │        │
   │      ┌──────────────────┐         │   POS TERMINAL       │        │
   │      │ TRANSMIT DELETION │        └──────────┬───────────┘        │
   │      │ COMMAND FOR       │              S38  │                    │
   │      │ PACKAGE TO        │          ◇ END OF ◇  N      S40        │
   │      │ BE DELETED        │─ S34    ◇ NORMAL LOADING ◇──┐          │
   │      └──────┬───────────┘           ◇    ?    ◇       │          │
   │      ┌──────────────┐                   │ Y    ┌──────────────┐   │
   │      │ EXTRACT PACKAGE│          ┌──────────────────┐│ANALYZE ERROR│ │
   │      │ TO BE ADDED    │          │ UPDATE PACKAGE   │└──────┬───────┘ │
   │      └──────┬────S35──┘          │ MANAGEMENT TABLE │   S41 │       │
   │             │                    └──────┬───────────┘  ◇ BLANK AREA ◇ N│
   └─────────────┘                    ┌──────────────┐  ◇ INADEQUATE? ◇────┘
                                      │     END      │─ S39    ◇
                                      └──────────────┘         │ Y
```

# Fig. 10

```
                    START

              ┌─────────────────┐
              │    COMMAND      │  N
              │   RECEIVED?     │────────┐
              └─────────────────┘        │
                   S50   │Y              │
              ┌─────────────────┐        │
              │ ANALYZE COMMAND │─S51    │
              └─────────────────┘        │
                      │                  │
              ┌─────────────────┐        │
              │      LOAD       │  N
              │    COMMAND?     │──────────────┐
              └─────────────────┘              │
                 S52  │Y                       │
                                               │
                                    ┌─────────────────┐
                                    │    DELETE       │  Y
                                    │   COMMAND?      │────────────┐
                                    └─────────────────┘            │
                                       S53  │N                     │
```

S50 COMMAND RECEIVED? N

S51 ANALYZE COMMAND

S52 LOAD COMMAND? N

S53 DELETE COMMAND? Y

S54 DELETE PERTINENT PACKAGE

S58 RECEIVE PACKAGE TO BE ADDED

S66 END COMMAND? N

S55 SHIFT OTHER PACKAGES TO BLANK AREA FORMED BY DELETION, AND CONSOLIDATE BLANK AREAS TO ONE LOCATION

S59 REFER TO BLANK-AREA MANAGEMENT TABLE AND RETRIEVE BLANK AREA

END

S60 IS THERE BLANK AREA? N

S65 TRANSMIT ERROR RESPONSE (INADEQUACY OF BLANK AREA)

S56 UPDATE BLANK-AREA MANAGEMENT TABLE

S61 LOAD ADDITIONAL PACKAGE IN BLANK AREA

S67 TRANSMIT COMMAND-ABNORMAL RESPONSE

S57 UPDATE PACKAGE-ADDRESS MANAGEMENT TABLE

S62 UPDATE BLANK-AREA MANAGEMENT TABLE

S63 UPDATE PACKAGE-ADDRESS MANAGEMENT TABLE

S64 TRANSMIT LOAD-NORMAL RESPONSE

EP 0 519 071 A1

# Fig.11

EP 0 519 071 A1

# Fig. 12

| 50 | 51 | 52 | 53 |

```
┌─────────┐   ┌─────────┐   ┌─────────┐   ┌─────────┐
│         │   │         │   │         │   │  CLOCK  │
│  C P U  │   │  R O M  │   │  R A M  │   │ SIGNAL  │
│         │   │         │   │         │   │GENERATOR│
└─────────┘   └─────────┘   └─────────┘   └─────────┘
```

```
┌──────────┐  ┌─────────┐  ┌─────────┐  ┌───────────┐  ┌───────────┐
│ KEYBOARD │  │ DISPLAY │  │ PRINTER │  │  IN-LINE  │  │  ON-LINE  │
│          │  │  UNIT   │  │         │  │ INTERFACE │  │ INTERFACE │
└──────────┘  └─────────┘  └─────────┘  └───────────┘  └───────────┘
```

| 54 | 55 | 56 | 57 | 58 |

# Fig.13

RESIDENT PROGRAM

PACKAGE INTERFACE PROGRAM

51

## Fig. 14

ADDRESS

MEMORY MANAGEMENT TABLE

ada1

APPLICATION PROGRAM

add1

LOCAL DATA

ada2

APPLICATION PROGRAM

add2

LOCAL DATA

PACKAGE 1

PACKAGE 2

adan

APPLICATION PROGRAM

addn

LOCAL DATA

addc

PACKAGE n

PACKAGE AREA

52

adfc

FILE

adfs

FILE AREA

# Fig.15

| | |
|---|---|
| PACKAGE AREA STARTING ADDRESS adal | |
| PACKAGE AREA CURRENT ADDRESS addc | |
| FILE AREA STARTING ADDRESS adfs | |
| FILE AREA CURRENT ADDRESS adfc | |
| DATA RELATING TO PACKAGE 1 | ID NO. |
| | PROGRAM STARTING ADDRESS add1 |
| | LOCAL DATA STARTING ADDRESS addl |
| DATA RELATING TO PACKAGE 2 | ID NO. |
| | PROGRAM STARTING ADDRESS ada2 |
| | LOCAL DATA STARTING ADDRESS add2 |
| | |
| DATA RELATING TO PACKAGE n | ID NO. |
| | PROGRAM STARTING ADDRESS adan |
| | LOCAL DATA STARTING ADDRESS addn |

53

Fig. 16

EP 0 519 071 A1

```
┌─────────────┐                  ┌─────────────┐                  ┌─────────────┐
│  PACKAGE i  │                  │   PACKAGE   │                  │  PACKAGE j  │
└─────────────┘                  │  INTERFACE  │                  └─────────────┘
      │                          └─────────────┘                        │
┌──────────────────┐ S70   ┌────────────────────────┐ S73   ┌────────────────────────┐ S75
│ EXECUTE PROCESSING│       │ RETRIEVE, IN MEMORY     │       │       EXECUTE          │
│   SPECIFIC TO     │       │ MANAGEMENT TABLE,       │       │     PROCESSING         │
│   PACKAGE i       │       │ STARTING ADDRESS        │       │    SPECIFIC TO         │
└──────────────────┘       │ OF PROGRAM OF           │       │    PACKAGE j           │
      │                    │ PACKAGE FOR WHICH       │       │  [ADD PROGRAM          │
┌──────────────────┐ S71   │ ID NO. COINCIDES        │       │ STARTING ADDRESS       │
│    pacall        │       │ WITH Pj(PID)            │       │  OR LOCAL-DATA         │
│  (Pj,a,b,c)      │       └────────────────────────┘       │ STARTING ADDRESS       │
└──────────────────┘                  │                     │  TO RELATIVE           │
      │                    ┌────────────────────────┐ S74   │   ADDRESS]             │
┌──────────────────┐       │ JUMP TO STARTING        │       └────────────────────────┘
│ EXECUTE PROCESSING│       │ ADDRESS OF              │                  │
│   SPECIFIC TO     │       │ PROGRAM RETRIEVED       │            ┌───────────┐
│   PACKAGE i       │       └────────────────────────┘            │  RETURN   │
└──────────────────┘                  │                          └───────────┘
      │  S72                    ┌───────────┐
                               │    END    │
                               └───────────┘
```

Fig. 17

Fig.18

EP 0 519 071 A1

## Fig. 20

| |
|---|
| SETTING-FUNCTION PACKAGE |
| TRANSACTION-FUNCTION PACKAGE |
| REPORT-FUNCTION PACKAGE |
| GROUP-REGISTRATION PACKAGE |
| PLU-REGISTRATION PACKAGE |
| DISCOUNTING-FUNCTION PACKAGE |

## Fig. 19

| |
|---|
| RESIDENT PROGRAM |
| |

## Fig. 21

```
              ┌──────────────────┐
              │     RESIDENT     │
              │     PROGRAM      │
              └──────────────────┘
                       │
       ┌───────────────┼───────────────┐
┌──────────────┐ ┌──────────────┐ ┌──────────────┐
│  SETTING-    │ │ TRANSACTION- │ │   REPORT-    │
│  FUNCTION    │ │  FUNCTION    │ │   FUNCTION   │
│  PROGRAM     │ │  PACKAGE     │ │   PACKAGE    │
└──────────────┘ └──────────────┘ └──────────────┘
       ┊               │               ┊
       └───────────────┼───────────────────────────────┐
                       │                                │
┌──────────────┐ ┌──────────────┐ ┌──────────────┐
│   GROUP-     │ │     PLU-     │ │ DISCOUNTING- │
│ REGISTRATION │ │ REGISTRATION │ │  FUNCTION    │     ───
│  PACKAGE     │ │  PACKAGE     │ │  PACKAGE     │     ───
└──────────────┘ └──────────────┘ └──────────────┘
```

58

# Fig. 22

Fig. 23

```
                    ┌──────────┐
                    │  START   │
                    └────┬─────┘
                         │
         ┌───────────────────────────┐ ─S80
         │ EXECUTE INITIAL-          │
         │ IZING PROCESSING          │
         └───────────────┬───────────┘
                         │
         ┌───────────────────────────┐ ─S81
         │      RECEIVE              │
         │   DLL-START              │
         │    MESSAGE               │
         └───────────────┬───────────┘
                         │
         ┌───────────────────────────┐ ─S82
         │     RECEIVE              │
         │ PACKAGE ID AND          │
         │ TERMINAL NO.            │
         └───────────────┬───────────┘
                         │
         ┌───────────────────────────┐ ─S83
         │  RECEIVE PACKAGE         │
         └───────────────┬───────────┘
                         │
         ┌───────────────────────────┐ ─S84
         │    RECEIVE              │
         │ END MESSAGE            │
         └───────────────┬───────────┘
                         │
         ┌───────────────────────────┐ ─S85
         │       N  =  O            │
         └───────────────┬───────────┘
```

TRANSMIT DLL-START MESSAGE TO SATELLITE POS TERMINAL NO. N ─S87

TRANSMIT PACKAGE ID TO SATELLITE POS TERMINAL NO. N ─S88

TRANSMIT PACKAGE TO SATELLITE POS TERMINAL NO. N ─S89

N ← N + 1 ─S90

S86
IS NO. N TO UNDERGO DLL ?

S91
ALL TERMINALS COMPLETED?

S92
EXECUTE END PROCESSING

END

## Fig.24

| MEMORY-MANAGEMENT/NUMBER-OF-EXECUTIONS MANAGEMENT TABLE | | |
|---|---|---|
| ID NO. | PROGRAM STARTING ADDRESS | NUMBER OF TIMES CALLED |
| 1240 | AF45 | 12 |
| 1101 | DE56A | 546 |
| 4515 | 45BC5 | 0 |
| ⋮ | ⋮ | ⋮ |

## Fig.25

| EXECUTION HISTORY TABLE | |
|---|---|
| PACKAGE ID NO. | TIME CALLED |
| 6575 | 11 : 12 : 45 |
| 3436 | 11 : 12 : 47 |
| 1101 | 11 : 12 : 55 |
| ⋮ | ⋮ |

## Fig.26

```
                    ┌─────────────┐
                    │    START    │
                    └─────────────┘
                           │
          ┌────────────────────────────────┐
          │   RETRIEVE PACKAGE ID          │
          │      IN MEMORY                 ├─── S100
          │   MANAGEMENT TABLE             │
          └────────────────────────────────┘
                           │          S101
                         ◇ IS ◇
                      PERTINENT              N
                   PACKAGE PRESENT?  ─────────────┐
                         ◇ ◇                      │
                           │ Y              ┌──────────────┐
                           │                │   RETURN     │
          ┌────────────────────────────┐   └──────────────┘
          │   INCREMENT NUMBER         │
          │     OF TIMES CALLED        ├─── S102
          └────────────────────────────┘
                           │
          ┌────────────────────────────┐
          │  STORE PACKAGE ID AND      │
          │  TIME IN EXECUTION         ├─── S103
          │   HISTORY TABLE            │
          └────────────────────────────┘
                           │
          ┌────────────────────────────┐
          │   SHIFT TO PACKAGE         │
          │   INTERFACE PROGRAM        ├─── S104
          └────────────────────────────┘
                           │
                    ┌─────────────┐
                    │     END     │
                    └─────────────┘
```

## Fig.27

| |
|---|
| PACKAGE ID |
| UNIT PRICE |
| MEMORY CAPACITY |
| OPTIONAL EQUIPMENT NO. |
| PACKAGE DATA TABLE |

ONE RECORD

## Fig.28

| |
|---|
| STANDARD HARDWARE PRICE |
| 256K RAM UNIT PRICE |
| 512K RAM UNIT PRICE |
| 1M RAM UNIT PRICE |
| 256K ROM UNIT PRICE |
| 512K ROM UNIT PRICE |
| 1M ROM UNIT PRICE |
| HARDWARE UNIT-PRICE TABLE |

## Fig.29

| |
|---|
| OPTIONAL EQUIPMENT NO. 1 UNIT PRICE |
| OPTIONAL EQUIPMENT NO. 2 UNIT PRICE |
| OPTIONAL EQUIPMENT NO. m UNIT PRICE |
| OPTIONAL EQUIPMENT UNIT-PRICE TABLE |

EP 0 519 071 A1

# Fig.30

```
          ( START )
              |
              v
         S110 /\
           /      \
          / CHANGE  \   Y
          \ UNIT     / -------------+
           \ PRICE? /               |
            \      /                |
             \  /                   v
              | N           S111  +----------------+
              v                   |    REWRITE     |
    +-------------------+         |   UNIT PRICE   |
    |  INPUT LIST OF    | S112    +----------------+
    | REQUIRED FUNCTIONS|                |
    +-------------------+ <--------------+
              |
              v
    +-------------------+
    | DECIDE NECESSARY  | S113
    |   PACKAGE ID      |
    +-------------------+
              |
              v
    +-------------------+
    |   ADD UP UNIT     |
    |   PRICES OF       |
    | NECESSARY PACKAGE | S114
    |     IDs -> S      |
    +-------------------+            +-------------------+
              |                      | DECIDE OPTIONAL   |
              v                      | EQUIPMENT OF      |
    +-------------------+            |   NECESSARY       |
    |  ADD UP MEMORY    |            |   PACKAGE ID      | S118
    |  CAPACITIES OF    | S115       +-------------------+
    | NECESSARY PACKAGE |                     |
    |     IDs -> M      |                     v
    +-------------------+            +-------------------+
              |                      |   ADD UP UNIT     |
              v                      | PRICES OF OPTIONAL|
    +-------------------+            | EQUIPMENTS -> B   | S119
    | DECIDE NECESSARY  |            +-------------------+
    | MEMORIES BASED UPON| S116               |
    | MEMORY CAPACITY M |                     v
    +-------------------+            +-------------------+
              |                      |  ADD A AND B TO   |
              v                      | STANDARD HARDWARE |
    +-------------------+            |   PRICE -> H      | S120
    |   ADD UP UNIT     |            +-------------------+
    |   PRICES OF       |                     |
    | NECESSARY MEMORIES| S117                v
    |     -> A          |            +-------------------+
    +-------------------+            | DISPLAY S, H, M   |
              |                      +-------------------+
              +---------------------->        |
                                              v      S121
                                          ( END )
```

# INTERNATIONAL SEARCH REPORT

International Application No PCT/JP91/00297

**I. CLASSIFICATION OF SUBJECT MATTER (if several classification symbols apply, indicate all)** [6]

According to International Patent Classification (IPC) or to both National Classification and IPC

Int. Cl$^5$  G06F9/06, 13/00

**II. FIELDS SEARCHED**

| Minimum Documentation Searched [7] | |
|---|---|
| Classification System | Classification Symbols |
| IPC | G06F9/06, 13/00, 15/21, 15/40 |

Documentation Searched other than Minimum Documentation
to the Extent that such Documents are Included in the Fields Searched [8]

| | |
|---|---|
| Jitsuyo Shinan Koho | 1926 - 1990 |
| Kokai Jitsuyo Sinan Koho | 1971 - 1990 |

**III. DOCUMENTS CONSIDERED TO BE RELEVANT** [9]

| Category* | Citation of Document, [11] with indication, where appropriate, of the relevant passages [12] | Relevant to Claim No. [13] |
|---|---|---|
| X | JP, A, 62-32546 (Alps Electric Co., Ltd.), February 12, 1987 (12. 02. 87) | 1 |
| Y | JP, A, 62-32546 (Alps Electric Co., Ltd.), February 12, 1987 (12. 02. 87) | 2-10, 21-46 |
| Y | JP, A, 58-175037 (Fujitsu Ltd.), October 14, 1983 (14. 10. 83) | 4-111 |
| Y | JP, A, 56-74728 (Fujitsu Ltd.), June 20, 1981 (20. 06. 81) | 66-111 |
| Y | JP, A, 62-231360 (USAC Denshi Kogyo K.K.), October 9, 1987 (09. 10. 87) | 21-30, 60-78, 82-87 |
| Y | JP, A, 63-187357 (Toshiba Corp.), August 2, 1988 (02. 08. 88) | 6-10, 13-20, 22-30, 49-56, 61-72, 83-87 |
| Y | JP, A, 61-290548 (Fujitsu Ltd.), December 20, 1986 (20. 12. 86) | 29, 73, 80, 89 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 27, 1991 (27. 05. 91) | June 10, 1991 (10. 06. 91) |
| International Searching Authority | Signature of Authorized Officer |
| Japanese Patent Office | |

Form PCT/ISA/210 (second sheet) (January 1985)

| FURTHER INFORMATION CONTINUED FROM THE SECOND SHEET | | |
|---|---|---|
| Y | JP, A, 62-216036 (NEC Corp.), September 22, 1987 (22. 09. 87) | 35, 93, 96, 97, 103, 104, 120, 125 |
| Y | JP, A, 63-178358 (Fujitsu Ltd.), July 22, 1988 (22. 07. 88) | 36-39, 75-78, 108-115 |
| Y | JP, A, 63-278164 (Fujitsu Ltd.), November 15, 1988 (15. 11. 88) | 38, 39, 77, 78, 110, 111, 114, 115 |
| Y | JP, A, 64-68833 (NEC Corp.), March 14, 1989 (14. 03. 89) | 40, 41, 98-100, 105-107, |

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers          . because they relate to subject matter not required to be searched by this Authority, namely:

2.☐ Claim numbers          , because they relate to parts of the international application that do not comply with the prescribed requirements to such an extent that no meaningful international search can be carried out. specifically:

3.☐ Claim numbers          , because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)

International Application No. PCT/JP91/00297

| FURTHER INFORMATION CONTINUED FROM THE SECOND SHEET | | |
|---|---|---|
| | | 116-119, 121-124 |
| Y | JP, A, 63-118836 (Toyota Motor Corp., Fuji Electric Co., Ltd.), May 23, 1988 (23. 05. 88) | 43-46, 126-131 |

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers          . because they relate to subject matter not required to be searched by this Authority, namely:

2.☐ Claim numbers          , because they relate to parts of the international application that do not comply with the prescribed requirements to such an extent that no meaningful international search can be carried out, specifically:

3.☐ Claim numbers          , because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)